# EUROPEAN PATENT SPECIFICATION

(11) **EP 4 141 453 B1**
(45) Date of publication and mention of the grant of the patent: **03.04.2024**
(21) Application number: 22184658.7
(22) Date of filing: 13.07.2022
(51) Int. Cl.: G01P 15/08, B81B 5/00, G01P 15/125

(54) **SEESAW ACCELEROMETER**
WIPPEN-BESCHLEUNIGUNGSMESSER
ACCÉLÉROMÈTRE À BASCULE

(30) Priority: 25.08.2021 FI 20215891
(43) Date of publication of application: 01.03.2023
(73) Proprietor: Murata Manufacturing Co., Ltd., Nagaokakyo-shi, Kyoto 617-8555 (JP)
(72) Inventor: SANDVIK, Kim, 02650 Espoo (FI)
(74) Representative: Boco IP Oy Ab

(56) References cited:
- US-A1- 2012 186 347
- US-A1- 2014 251 011
- US-A1- 2018 340 776
- US-B2- 7 121 141

## Description

### FIELD OF THE DISCLOSURE

The present disclosure relates to microelectromechanical (MEMS) devices, and more particularly to accelerometers where a proof mass turns in seesaw motion of out of the device plane in response to an acceleration which is perpendicular to the device plane. The present disclosure further concerns arrangements for measuring this seesaw motion.

### BACKGROUND OF THE DISCLOSURE

A MEMS accelerometer typically comprises a device layer where micromechanical structures are formed by etching. The device layer defines a device plane. In this disclosure, the device plane will be illustrated as the xy-plane. The device layer may for example be formed in a device wafer.

A proof mass formed in the device layer can be configured to respond to acceleration in the direction of a z-axis (which is perpendicular to the xy-plane) by rotating in seesaw motion about a rotation axis which lies in the xy-plane. The proof may be asymmetric with respect to this rotation axis, so that it's center of mass does not lie on the axis. The proof mass may be suspended from fixed anchor points by suspenders which are sufficiently flexible in one rotational direction to undergo torsional twisting when the accelerometer experiences acceleration in the z-direction and the proof mass begins to turn out of the xy-plane.

The seesaw motion of the proof mass is typically detected in a capacitive measurement conducted between the proof mass (or an electrode placed on the proof mass) and an adjacent counter-electrode which is placed on a surface which remains fixed in relation to the device plane.

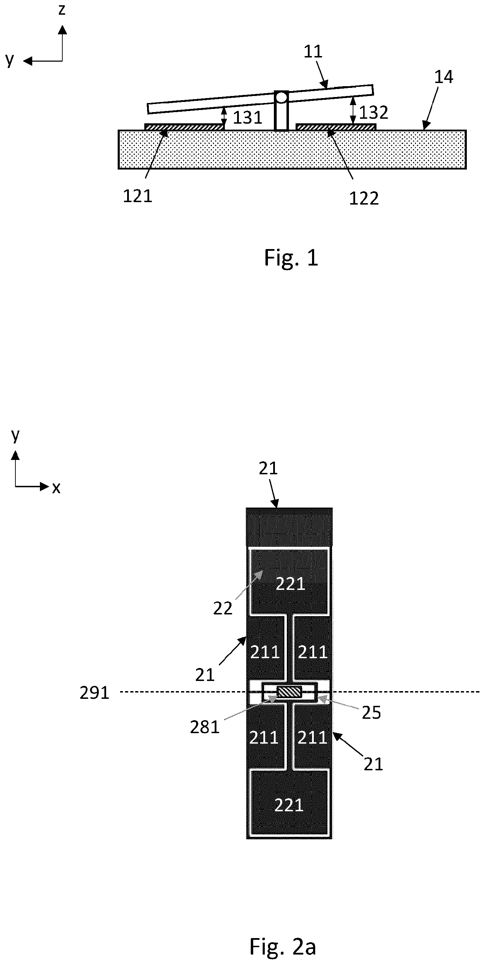

Figure 1 illustrates an accelerometer with a proof mass 11 and counter-electrodes 121 and 122 on the fixed surface 14. The rotation of the proof mass 11 toward and away from the counter-electrodes 121 - 122 changes the capacitance. A differential capacitive measurement can be carried out by using both counter-electrodes 121 and 122. The gaps 131 and 132 between the proof mass 11 (or an electrode on the proof mass) and the counter-electrode 121 / 122 may be called capacitor gaps.

A general problem with this design can be seen directly in figure 1: the rate at which the capacitor gap increases or decreases at a given point of the counter-electrode depends on the distance of that point from the rotation axis. This means that the regions of the capacitor which are most distant from the rotation axis will contribute more to the sensitivity (capacitance change per rotational displacement) of the measurement than the regions which lie closer to the rotation axis. The signal-to-noise ratio of the measurement signal would be improved if the regions which lie close to the rotation axis could provide a greater contribution to the signal.

Document US2020081028 describes a z-axis accelerometer where the problem is addressed by building counter-electrodes with varying thickness. Document US7121141 discloses a z-axis accelerometer where the thickness of the proof mass is varied instead. Document US2014251011 shows a z-axis accelerometer comprising adjacent first and second proof masses suspended from anchor points by a torsionally flexible suspension structure.

### BRIEF DESCRIPTION OF THE DISCLOSURE

An object of the present disclosure is to provide an apparatus which improves the sensitivity of a seesaw accelerometer.

The object of the disclosure is achieved by an arrangement which is characterized by what is stated in the independent claim. The preferred embodiments of the disclosure are disclosed in the dependent claims.

The disclosure is based on the idea of utilizing two or more rotating proof masses which are adjacent to each other and are designed to rotate at different angular velocities when the accelerometer experiences acceleration. The proof mass which rotates more is designed to approach the counter-electrode in an area which lies close to the rotation axis, while the proof mass which rotates less is designed to approach the counter-electrode in an area which lies further away from the rotation axis. An advantage of this arrangement is that a significant contribution to the measurement signal can be drawn from both of these areas.

### BRIEF DESCRIPTION OF THE DRAWINGS

In the following the disclosure will be described in greater detail by means of preferred embodiments with reference to the accompanying drawings, in which
Figure 1 illustrates an accelerometer known from the prior art.
Figure 2a illustrates an accelerometer with a first proof mass and a second proof mass.
Figures 2b - 2c illustrate counter-electrodes which are adjacent to the proof masses.
Figure 2d illustrates one example of the geometry of a measurement region.
Figure 2e illustrates an accelerometer with first, second and third proof masses.
Figure 2f illustrates an accelerometer where the vertical distances from each measurement area to the corresponding subregion of the counter-electrode are equal.
Figures 3a - 3b illustrate an accelerometer with a central anchor point.
Figures 4a - 4c illustrate accelerometers with side anchor points.
Figures 5a - 5b illustrate accelerometers with both central and side anchor points.
Figures 6a - 6d illustrate accelerometers with asymmetric suspensions.
Figures 7a - 7b illustrate an accelerometer where a first proof mass surrounds a second proof mass and a third proof mass.
Figures 8a - 8d illustrate accelerometers where the centers of mass of two proof masses lie on opposite sides of the rotation axis.
Figures 9a - 9b illustrate accelerometers where the centers of mass of two proof masses lie on the same side of the rotation axis.
Figures 10a - 10d illustrate accelerometers where proof masses are suspended separately.
Figure 11 illustrates an accelerometer with two sets of proof mass oriented in opposite directions.

### DETAILED DESCRIPTION OF THE DISCLOSURE

This disclosure describes an accelerometer for measuring acceleration in the direction of a z-axis which is perpendicular to an xy-plane. The accelerometer comprises a first proof mass and one or more anchor points. The first proof mass is suspended from the one or more anchor points by a torsionally flexible suspension structure which allows the first proof mass to rotate about a rotation axis which lies in the xy-plane.

The accelerometer also comprises a second proof mass which is adjacent to the first proof mass and suspended from said one or more anchor points by the suspension structure. The suspension structure allows the second proof mass to rotate about the rotation axis.

The accelerometer comprises one or more first counter-electrodes which are adjacent to the first and second proof masses in the z-direction on a first side of the rotation axis so that the one or more first counter-electrodes define a first measurement region in the xy-plane on the first side of the rotation axis.

The first measurement region comprises a first subregion in the xy-plane which lies closest to the rotation axis and a second subregion in the xy-plane which lies further away from the rotation axis. The first proof mass comprises one or more first measurement areas in the first subregion of the first measurement region, and the second proof mass comprises one or more second measurement areas in the second subregion of the first measurement region,

The first and second proof masses and the suspension structure are dimensioned so that a ratio L / K is greater for the first proof mass than for the second proof mass. The ratio has the same sign for both proof masses. L is the sum of the torques which act on said proof mass when the accelerometer undergoes acceleration in the direction of the z-axis. K is the spring constant for the rotational motion of said proof mass about the rotation axis.

Optionally, to facilitate a differential capacitive measurement of proof mass displacement conducted on both sides of the rotation axis, the accelerometer may also comprise one or more second counter-electrodes which are adjacent to the first and second proof mass in the z-direction on a second side of the rotation axis so that the one or more second counter-electrodes define a second measurement region in the xy-plane on the second side of the rotation axis.

The first proof mass may also comprise one or more first measurement areas in the first subregion of the second measurement region, and the second proof mass may also comprise one or more second measurement areas in the second subregion of the second measurement region. The first measurement areas in the first subregion of the first measurement region may be substantially reflection-symmetric with the first measurement areas in the first subregion of the second measurement region with respect to the rotation axis. Correspondingly, the second measurement areas in the second subregion of the first measurement region may be substantially reflection-symmetric with the second measurement areas in the second subregion of the second measurement region with respect to the rotation axis.

The examples and explanations given below will focus primarily on two-sided implementations where a differential capacitive measurement is implemented. However, the same general principles apply to the movement of the proof masses both in the case of one-sided (non-differential) displacement measurements and in two sided (differential) ones. In other words, although the proof masses illustrated in the figures of this disclosure extend to both sides of the rotation axis, the general principle of proof mass motion - that a proof mass which has a measurement area closer to the rotation axis rotates more than a proof mass which has a measurement area further away from the rotation axis - can be implemented even with proof masses which extend only in one direction from the rotation axis. The motion of such one-sided proof masses cannot be measured with the differential principle described above, but it can be measured with a simple (non-differential) capacitive displacement measurement.

The examples and explanations given below will also focus on primarily on two-sided suspensions where masses are attached to each other with two connecting suspenders. However, one-sided suspensions, where only one connecting suspender is attached between two masses, are also possible in each embodiment.

Furthermore, the examples and embodiments presented below show anchoring suspenders which extend directly from an anchor point to a proof mass. However, the suspension structure could alternatively comprise an intermediate stiff structure which is placed between the anchor point and the anchoring suspender. The suspension structure could also comprise some rigid suspension parts which extend between two proof masses if these rigid parts are connected in series with a torsionally flexible suspender.

Figure 2a illustrates an accelerometer with a first proof mass 21 and a second proof mass 22. Both of these proof masses are suspended from an anchor point 281 by a torsionally flexible suspension structure 25. The proof masses 21 and 22 may lie in the xy-plane in their rest position. The suspension structure allows both the first (21) and the second (22) proof mass to rotate about a rotation axis 291 when the accelerometer undergoes acceleration in the direction of the z-axis which is perpendicular to the illustrated xy-plane.

As illustrated later in this disclosure, several anchor points can be used. The suspension structure can also be designed in many different ways, but it includes at least one torsionally flexible element. Torsionally flexible elements may also be called torsionally flexible suspenders or torsion springs. In this disclosure, the term "spring" refers to a device part which is flexible in at least one direction. Torsionally flexible elements may for example be simple bars which have a length dimension which is much longer than their width dimension, or they may be springs with a meandering shape. Torsionally flexible elements may be designed to twist about an axis. The torque required for twisting a torsionally flexible element by a given amount is determined by its geometry.

The term "suspension structure" refers to a combination of parts which together provide structural support to the proof masses and allow them to move in a certain manner. Suspension structures include at least one flexible spring which bends and/or twists when the suspended masses are in motion. Suspension structures may also include substantially rigid parts. This disclosure describes some suspension structures where torsionally flexible springs are arranged in series so that some of them extend from an anchor point to a proof mass, and others extend between proof masses. The flexible springs of a suspension structure may be called suspenders.

The torque which is required to rotate a given proof mass about the rotation axis by a given amount depends on how the suspension structure is constructed. It depends on the springs which are closest to the proof mass in question, but it also depends on the other parts of the suspension structure and possibly on the properties of other proof masses which are suspended from the same suspension structure. A spring constant K = L / Θ for the rotational motion of any proof mass about the rotation axis can be defined as a ratio between the torque L applied to said proof mass and the resulting angular displacement Θ of said proof mass. This spring constant is determined primarily by the suspension structure design, for example by the dimensions of torsionally flexible elements which extend between proof masses and to the anchor points. If proof mass A is connected to another proof mass B by a torsionally flexible element, the dimensions of proof mass B and the details of the suspension structure will also influence the spring constant which guides the movement of mass A.

In figures 2a - 2f and other embodiments of this disclosure the xy-plane may be referred to as a horizontal plane and the z-axis may correspondingly be correspondingly be referred to as a vertical axis. However, these designations do not imply anything about how the accelerometer should be oriented in relation to the earth's gravitation field during use or manufacturing. They merely define a plane and a direction which is perpendicular to that plane.

An anchor point is a fixed structure in the MEMS device which is intended to remain substantially stationary in relation to other fixed structures in the device when the device undergoes acceleration. All anchor points illustrated in this disclosure lie on the rotation axis. However, they could also be located away from the rotation axis, and the suspension structure could include a substantially stiff extension structure (which is not designed to undergo torsional twisting) which extends from the anchor point to the rotation axis. Torsionally flexible elements could then be attached to this extension structure instead of being attached directly to the anchor point.

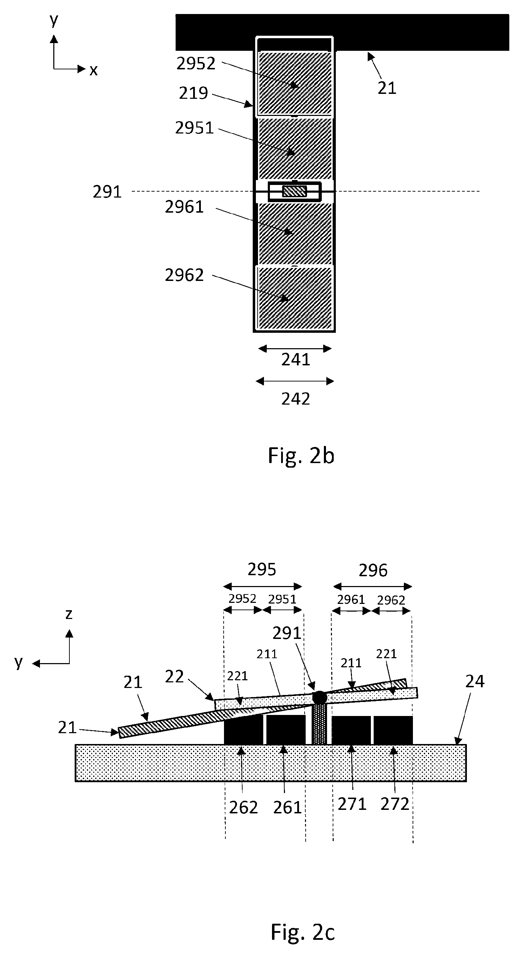

Figures 2b - 2c illustrate counter-electrodes 261 - 262 and 271 - 272 which are adjacent to the proof masses 21 and 22 in the z-direction. These counter-electrodes may for example be located on a vertically adjacent surface 24, which may for example be a part of the package where the accelerometer is enclosed. Counter-electrodes 261 - 262 are on a first side of the rotation axis 291 (left side in figure 2c) and 271 - 272 are on a second side of the rotation axis (right side in figure 2c). The locations of these electrodes define two measurement regions 295 - 296, one on each side of the rotation axis.

Two counter-electrodes are presented on each side of the rotation axis in figure 2c for illustrative purposes. In this case the measurement regions 295 and 296 are defined by the geometry of both counter-electrodes together in the xy-plane (261+262 and 271+272, respectively), and the subregions 2951 - 2952 and 2961 - 2962 are defined by one counter-electrode (for example, the subregion 2951 is defined by counter-electrode 261).

However, it is often preferable to use only one counter-electrode on each side of the rotation axis. This option has not been separately illustrated, but it is analogous to the presentation in figure 2c. The one counter-electrode then defines the measurement region (for example 295), and it is divided into subregions (2951 and 2952) at the interface between the first measurement area 211 on the first proof mass 21 and the second measurement area 221 on the second proof mass 22.

The movement of the proof masses can be measured with capacitive measurements in the measurement regions. The proof masses may be made of silicon. A capacitive measurement can then be carried out directly between a counter-electrode and a proof mass. Alternatively, conductive electrodes could be deposited on the parts of the proof mass which lie in the measurement region, and the measurement could then be carried out between these electrodes and the counter-electrodes.

Figure 2b illustrates one possible geometry for the measurement regions 295 - 296 in the xy-plane. Each measurement region (295 / 296) comprises a first subregion (2951 / 2961) which lies closer to the rotation axis 291 and a second subregion (2952 / 2962) which lies further away from the rotation axis 291. By comparing figure 2b to figure 2a, it can be seen that the first proof mass 21 in this case comprises four first measurement areas 211 in the first subregions 2951 and 2961. The first measurement areas are reflection-symmetric with respect to the rotation axis 291. The rotational displacement of the first proof mass 21 can therefore be measured with a differential capacitive measurement conducted in the first subregions.

Correspondingly, the second proof mass 22 here comprises two second measurement areas 221 in the second subregions 2952 and 2962. These second measurement areas are also reflection-symmetric with respect to the rotation axis 291. The rotational displacement of the second proof mass 22 can therefore be measured with a differential capacitive measurement conducted in the second subregions.

The first proof mass may (but does not have to) be connected in the suspension structure to a second proof mass (such as 22), which may either be symmetric or asymmetric with respect to the rotation axis. If this mechanical connection would be completely rigid, the two proof masses would simply rotate as one body. The two proof masses may rotate at different angular rotation rates if this mechanical connection has torsional flexibility.

If we assume that the second proof mass is symmetric with respect to the rotation axis, the acceleration itself will not generate any direct torque on this proof mass. However, the acceleration may nevertheless indirectly generate a torque on the second proof mass if it is mechanically connected to another proof mass which begins to rotate about the rotation axis due to its asymmetric shape. As described in more detail in the examples presented below, many different combinations of asymmetric / symmetric masses and connected / disconnected proof masses can be utilized to achieve a system where L / K is greater for the first proof mass than for the second proof mass when the system accelerates. The ratio L / K nevertheless has the same sign for both proof masses, which means that the proof masses rotate in the same direction about the rotation axis, not in opposite directions.

L is the sum of the torques which act on a proof mass (the first proof mass, for example) when the accelerometer undergoes acceleration in the direction of the z-axis. L can in some cases have many components. If the first proof mass is asymmetric with respect to the rotation axis 291 (such as proof mass 21 in figure 2a), the acceleration will always generate a first torque component L_{A} = m₁* a * d₁, where is m is the mass of the first proof mass, a is the magnitude of the acceleration and d₁ is the distance between the center of mass of the proof mass and the rotation axis 291. If the first proof mass is not directly connected to any other proof mass (as in the fourth embodiment presented below), then no torque will be transmitted from one proof mass to another and L = L_{A} (and correspondingly L = L_{B} = m₂ * a * d₂ for the second proof mass, and so on).

If, on the other hand, the first proof mass is connected to other proof masses by the suspension structure (as for example in the first embodiment and other embodiments presented below), then L may comprise not only L_{A}, but also other torque components L_{B}, L_{C},... which are produced by other asymmetric proof masses and transmitted to the first proof mass via the suspension structure. L may then for example be equal to L_{A} + L_{B} if the system comprises a second asymmetric proof mass whose center of mass is on the same side of the rotation axis as that of the first proof mass, or it may be L_{A} - L_{B} if the system comprises a second asymmetric proof mass whose center of mass is on the opposite side of the rotation axis. The torque acting on each proof mass will in either case have the same magnitude L.

The spring constant K = L / Θ, which determines the relationship between the torque acting on a given proof mass and the angular displacement which the torque produces in that proof mass, is determined by the design of the suspension structure: the location of the anchor points, the properties of the springs in the suspension structure and the geometries of the proof masses.

If L₁ indicates the sum of torques which act on the first proof mass, K₁ indicates the spring constant of the rotational motion of the first proof mass, L₂ indicates the sum of torques which act on the second proof mass and K₂ indicates the spring constant of the rotational motion of the second proof mass, the relationship described above can be written as L₁ / K₁ > L₂ / K₂. This relationship is equivalent to Θ₁ > Θ₂: the rotational displacement angle Θ₁ to which the first proof mass rotates as a result of a given acceleration is greater than the rotational displacement angle Θ₂ to which the second proof mass rotates as a result of the same acceleration. The accelerometer is a complex system where all parts interact with each other, and computer simulations may be needed to determine a suspension structure and proof mass design which, in response to a given acceleration, yields the desired rotational displacement angles.

Consequently, in figure 2c it can be seen that the first proof mass 21 has closed the capacitor gap to counter-electrode 261 by approximately the same amount as the second proof mass has closed the capacitor gap to counter-electrode 262. Significant contributions to the measurement signal can thereby be drawn from both counter-electrodes 261 and 262. In the case of a corresponding arrangement where just one counter-electrode is used on each side of the rotation axis, a significant contribution can be obtained both from the region which lies close to the rotation axis and from the region which lies further away.

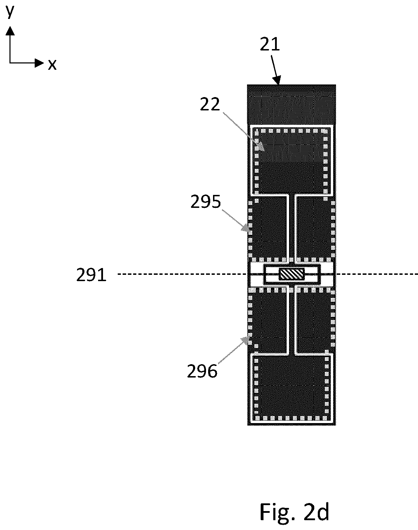

Since the first proof mass rotates more than the second proof mass, it may in some situations be necessary to design the accelerometer so that some parts of the first proof mass can move to a lower vertical level than the second subregion of the corresponding measurement region. This can be seen in figure 2c, although rotation angles have been exaggerated for illustrative purposes. It can be seen that the first proof mass 21 overlaps with the counter-electrode 262 yz-plane. Physical contact between counter-electrode 262 and proof mass 21 can be avoided for example by shaping the counter-electrode and the first proof mass so that they do not overlap in the xy-plane. The first proof mass can then turn past the counter-electrode without coming into contact with it. One example of this is illustrated in figure 2d, where the dashed lines illustrates measurement regions 295 and 296 defined by the geometry of underlying counter-electrodes.

It can be seen in figure 2d that the measurement regions are narrower in the x-direction in the second subregions which lie further from the rotation axis. This allows the sides of the first proof mass 21 to move past the counter-electrode in the second subregions. No similar restriction exists in the first subregion because the second proof mass rotates less than the first, so the counter-electrode could there even extend far beyond the proof masses in the x-direction.

Counter-electrode geometries which follow the general principle illustrated in figure 2d can be implemented in any example presented in this disclosure. The problem illustrated in figure 2c can also be solved by other means. Some parts of the first proof mass could for example be made thinner in the z-direction to avoid physical contact between the first proof mass and counter-electrodes.

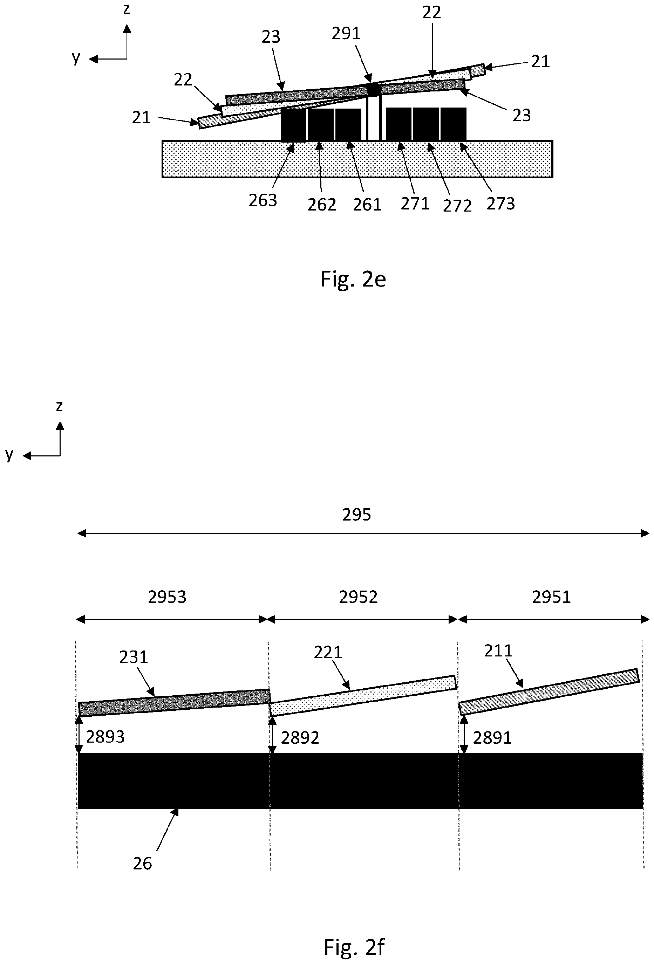

The number of proof masses can be increased to three (or to four, five, or any other number) to further increase the contributions to the measurement signal obtained from different parts of the measurement region. The three-mass alternative is illustrated in figure 2e, where the accelerometer also comprises a third proof mass 23 which is adjacent to the first and second proof masses and suspended from the suspension structure. The suspension structure allows the third proof mass to rotate about the rotation axis. In this case both the first and the second measurement regions also comprise a third subregion in the xy-plane (shown for illustrative purposes as separate electrodes 263 and 273, but as before the third subregion could just be a part of a single electrode). These third subregions lie further away from the rotation axis than the corresponding second subregions. The third proof mass comprises one or more third measurement areas in the third subregion of the first and second measurement region.

The third measurement areas in the third subregion of the first measurement region are substantially reflection-symmetric with the third measurement areas in the third subregion of the second measurement region with respect to the rotation axis. The first, second and third proof masses and the suspension structure are then dimensioned so that a ratio L / K is greater for the first proof mass than for the second proof mass, and greater for the second proof mass than for the third proof mass, but has the same sign for all three proof masses.

In response to acceleration in the z-direction, the first proof mass will then turn to the largest rotation angle, the second will turn to an intermediate angle and the third will turn to the smallest rotation angle. The first proof mass will contribute to the measurement signal in the first subregions, the second proof mass in the second subregions and the third proof mass in the third subregions. Devices where more than three proof masses are used utilize are analogous to this three-mass case.

By designing and dimensioning the proof masses and the suspension structure in a suitable manner, the accelerometer can be made to respond to a given magnitude of z-acceleration with a given amount of rotation in each proof mass. Figure 2f illustrates one design option. It shows a single counter-electrode 26 which defines a measurement region with a first subregion 2951, a second subregion 2952 and a third subregion 2953. The following parts of three proof masses are illustrated: a first measurement area 211 on the first proof mass, a second measurement area 221 on the second proof mass and a third measurement area 231 on the third proof mass. Only the measurement areas of each proof mass are illustrated - the other parts of each proof mass, which would partly overlap with the illustrated elements, have been excluded from the figure to facilitate clarity.

In figure 2f the accelerometer has been designed so that the vertical distances (2891 - 2893) from each measurement area (211 - 213) to the corresponding subregion (2951 - 2953) of the counter-electrode - measured for example at the edge of said subregion which is furthermost from the rotation axis - are equal (or substantially equal). In other words, even though the rotation angle of each proof mass differs from that of the others, the distances 2891, 2892 and 2893 can still be equal. This design criterion can be met with any number of proof masses. The measurement areas of all proof masses will then to a good approximation generate an equal contribution to the measurement signal.

However, the design illustrated in figure 2f is merely one option. Other design considerations can sometimes make it more advantageous to design the proof masses and the suspension structure so that the vertical distances 2891 - 2893 all differ from each other at all stages of proof mass movement, or so that two of them are equal but the third one differs from the others. The measurement areas on all three proof masses will also in these situations provide a contribution to the measurement signal. The contributions may not be equal, but because the first proof mass always rotates more than the second, and the second more than the third (if a third one is used), the signal will still be stronger than a signal obtained from a single proof mass and a single counter-electrode.

### Example embodiments

In the following examples, accelerometer comprising proof masses will be illustrated in the xy-plane. The first and second subregions (such as 2951 - 2952 and 2961 - 2962 in figure 2b) of the measurement regions will not be illustrated. Instead, the measurement areas on the proof masses (such as 211 and 221 in figure in figure 2a) will indicate the locations where the subregions are located. In general, the fact that a first measurement area on a first proof mass overlaps with a first subregion of the measurement region in the xy-plane does not preclude the possibility that some part of the second proof mass may also overlap with the first subregion.

In figures 2a and 2b, for example, measurement areas 211 overlap with first subregions 2951 and 2961, but the narrow extension, which forms a part of the second proof mass 22 and extends between the measurement areas 211 to measurement area 212, can also overlap with these first subregions. In any embodiment presented in this disclosure, any measurement areas (such as 211 in figure 2a, for example) may for example cover more than 50%, more than 60%, more than 70%, more than 80% or more than 90% of the corresponding subregions (such as first subregions 2951 and 2961 in figure 2b). Any subregion may have the same width in the x-direction as the proof masses together do, and the width of the corresponding measurement area may for example be more than 60%, more than 70%, more than 80% or more than 90% of the width of the subregion.

In all embodiments presented above, the measurement areas have a rectangular shape. This shape is often preferable because it facilitates optimal use of the available area, but measurement areas of any other shape could also be used.

### First embodiment

The center of mass of the first proof mass may lie on the first side of the rotation axis and the center of mass of the second proof mass may lie substantially on the rotation axis. The suspension structure may comprise one or more torsionally flexible anchoring suspenders which extend between the one or more anchor points and the second proof mass, and one or more torsionally flexible connecting suspenders which extend between the first proof mass and the second proof mass.

In this embodiment, due to the asymmetry of the first proof mass, a force which sets the accelerometer in accelerating motion will exercise a torque on the first proof mass 31. It will not exercise a torque on the second proof mass which is symmetric, but when the first proof mass turns the connecting suspenders will transmit a torque to the second proof mass. Due to the torsional flexibility of both the connecting suspenders and the anchoring suspenders, the second proof mass will turn in the same direction as the first, but to a rotation angle which is less than the rotation angle of the first proof mass.

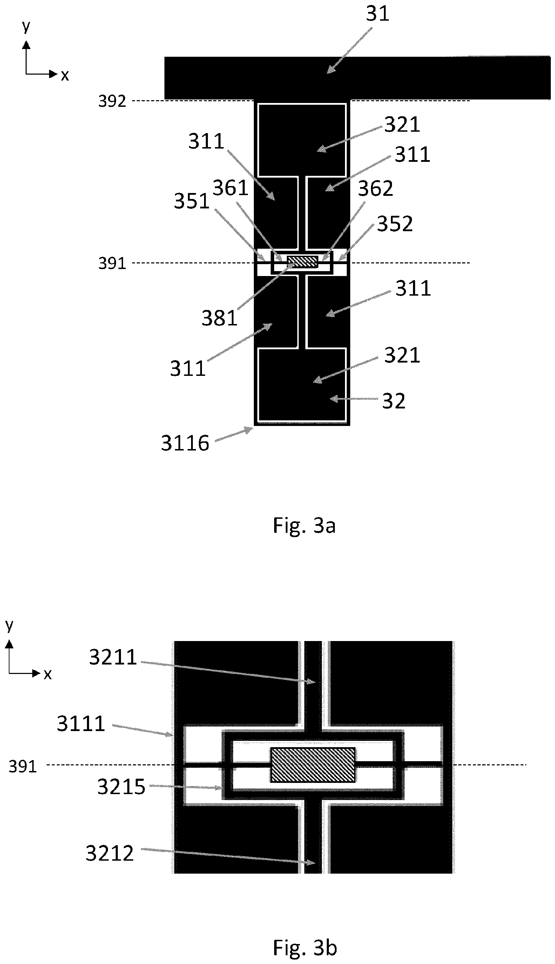

Figure 3a illustrates an example accelerometer where reference numbers 31, 32, 311, 321, 381 and 391 correspond to reference numbers 21, 22, 211, 221, 281 and 291, respectively, in figure 2a. The one or more anchor points 281 here comprise a central anchor point. The first proof mass surrounds the second proof mass. The second proof mass surrounds the central anchor point 281. The suspension structure comprises connecting suspenders 351 which extend between the first proof mass 31 and the second proof mass 32. The suspension structure also comprises a first anchored suspender 361 and a second anchored suspender 361 which extend in opposite directions along the rotation axis 391 from the central anchor point 381 to the second proof mass 32. The first (351) and second (352) connecting suspenders extend in opposite directions along the rotation axis 391 from the second proof mass 32 to the first proof mass 31 on opposite sides of the central anchor point 381.

In figure 3a the first proof mass 31 is asymmetric with respect to the rotation axis 391, as mentioned above. Nevertheless, it has a first part which is symmetric with respect to the rotation axis 391 - this is the part which lies below the axis 392 in figure 3a. The first part of the first proof mass 31 may be reflection-symmetric with respect to the central anchor point 381. But the first proof mass 31 also has the additional second part which extends above the axis 392 in figure 3a. The second part makes the first proof mass 31 as a whole asymmetric with respect to the rotation axis 391. The second proof mass 32 is in figure 3a substantially symmetric with respect to the rotation axis 391. The second proof mass may also be reflection-symmetric with respect to the central anchor point 381, as figure 3a illustrates.

In figure 3a, the first proof mass 31 comprises four rectangle-shaped measurement areas 311 which are placed symmetrically around the central anchor point 381, and connection bars which extend between these rectangles. Figure 3b illustrates the suspension structure and the center of the device in figure 3a in more detail. The first proof mass comprises connection bars 3111 which join the two sides of the first proof mass to each other.

The second proof mass 32 here comprises a frame part 3215 which surrounds the central anchor point 381 and elongated extension bars 3211 and 3212 which extend (1) orthogonally to the rotation axis in opposite directions from the frame part 3215 and (2) between the rectangle-shaped measurement areas 311 of the first proof mass which are seen in figure 3a. The connection bars 3111, the frame part 3215 and the extension bars 3211 and 3212 are stiff in the vertical z-direction, so that the first and second proof masses 31 - 32 turn as rigid bodies in seesaw motion about the rotation axis 391. These options can be applied in any embodiment where a central anchor point is used. The first part of the first proof mass also comprises frame part 3116 which extends around the rectangle-shaped measurement areas of the second proof mass.

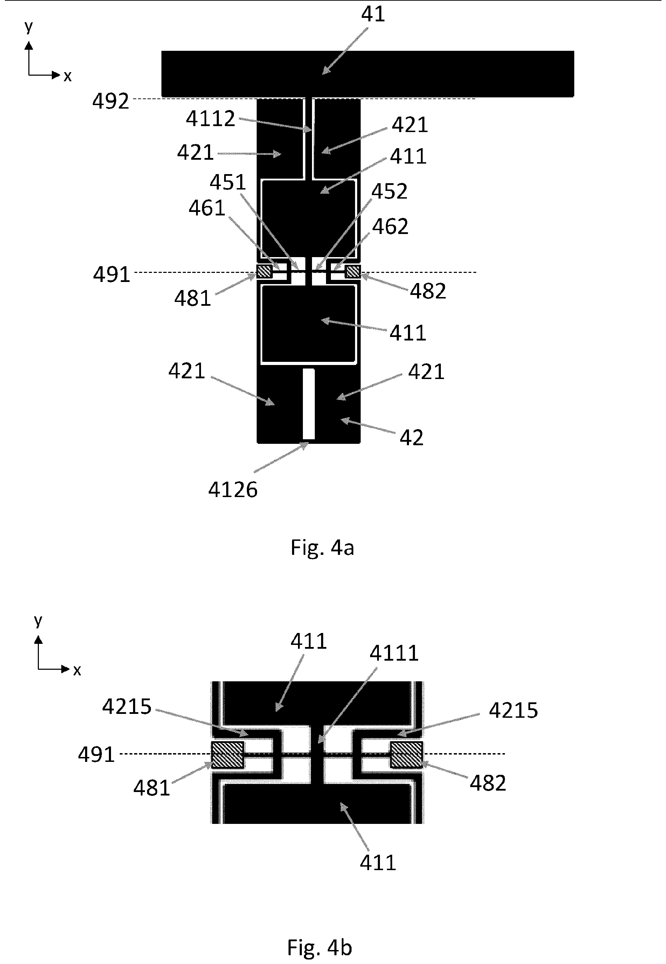

Figure 4a illustrates another example accelerometer where reference numbers 41, 42, 411, 421 and 491 correspond to reference numbers 21, 22, 211, 221 and 291, respectively, in figure 2a. The one or more anchor points here comprise a first side anchor point 481 and a second side anchor point 482. The second proof mass 42 surrounds the first proof mass 41.

The suspension structure in figure 4a comprises connecting suspenders 451 which extend between the first proof mass 41 and the second proof mass 42. The suspension structure also comprises a first anchored suspender 461 and a second anchored suspender 462 which extend from the second proof mass 42 to the two anchor points.

The design illustrated in figure 4a has been made compact in the x-direction by shaping the second proof mass 412 with a frame part 4215 near the rotation axis 491 which extends past the first and second side anchor points 481 - 482 so that the arrangement consumes little surface area in the x-direction. No frame parts would be needed in an alternative arrangement where the side anchor points are placed further away on each side. The first proof mass 41 comprises a first extension bar 4111 which connects the two measurement areas 411 near the rotation axis 491. The first proof mass 41 also comprises a second extension bar 4112 which extends between two of the rectangle-shaped measurement areas in the second proof mass 42 and across the second axis 492 to the second part of the first proof mass 41.

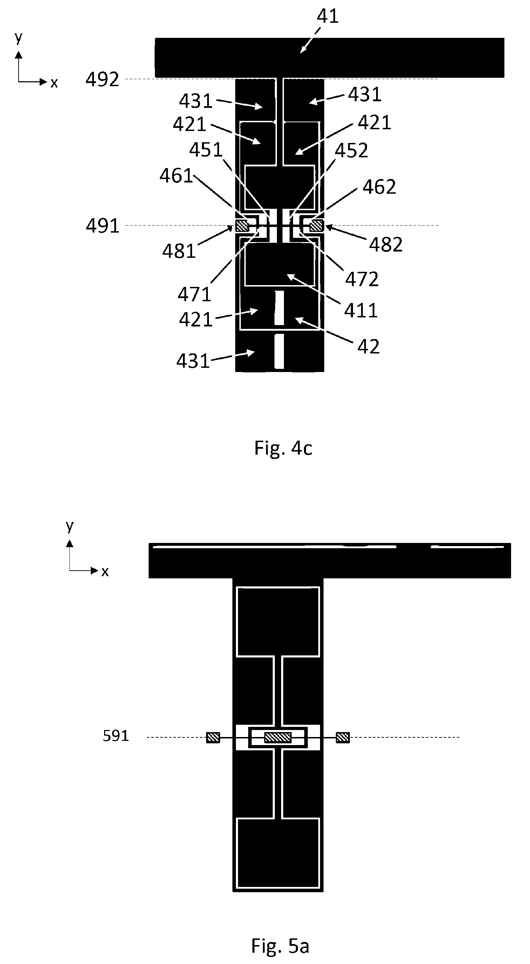

A further alternative, which has been illustrated in figure 4c, is that the accelerometer may comprise a third proof mass 43 which is suspended from the first side anchor point 481 and second side anchor point 482 by the suspension structure. The center of mass of the third proof 43 mass may lie substantially on the rotation axis, and it may comprise measurement areas 431. The suspension structure may also comprise a first additional torsionally flexible connecting suspender 471 and a second additional torsionally flexible connecting suspender 472 which couple the third proof mass 43 to the second proof mass 42 so that rotation of the second proof mass 42 about the rotation axis 491 generates rotation in the third proof mass 43 about the rotation axis 491. The third proof mass is in this case connected to the anchor points with the anchoring suspenders 461 - 462. The first proof mass will rotate the most and the second proof mass will rotate more than the third proof mass.

The third proof mass 43 may partly surround the second proof mass 42 and the first proof mass 41 as figure 4c illustrates. The second proof mass 412 may partly surround the first proof mass 411. The comments given above with reference to figure 4b apply to figure 4c as well, and it can be seen in figure 4c that the third proof mass 43 also may comprise frame parts which extend around the first and second side anchor points 481 - 482. In all figures 4a - 4c, the frame parts, connecting structures and extension bars of the proof masses 41 - 43 are stiff in the vertical direction so that the masses can rotate stiffly about the rotation axis 491.

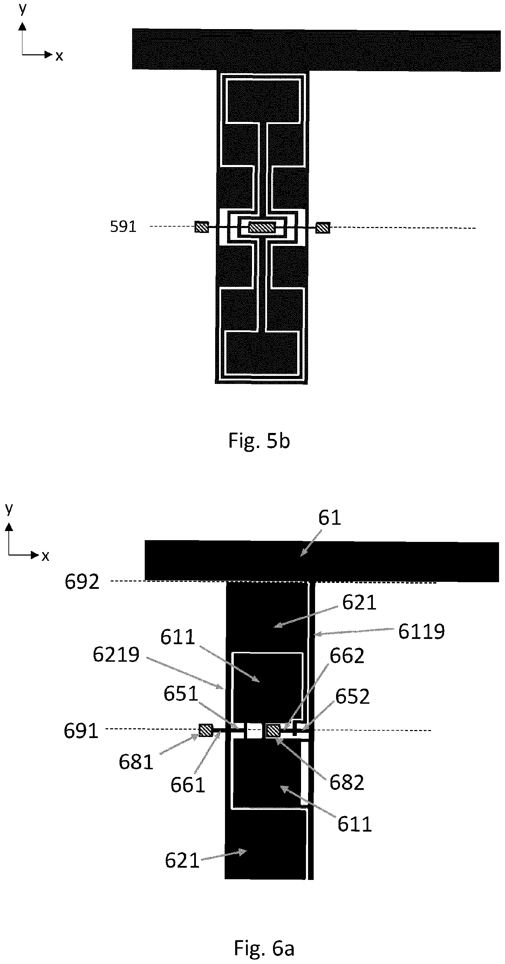

It is also possible to utilize both a central anchor point and first and second side anchor points for suspending the proof masses. Figure 5a illustrates this kind of suspension arrangement for two proof masses and figure 5b illustrates it for three proof masses.

The one or more anchor points can alternatively be arranged so that one anchor point is placed on one side of the proof masses, and another anchor point is placed near the center so that it is at least partly surrounded by the proof masses. Figure 6a illustrates this possibility for a device where reference numbers 61, 62, 611, 621 and 691 correspond to reference numbers 21, 22, 211, 221 and 291, respectively, in figure 2a.

In the example shown in figure 6a the one or more anchor points comprise a side anchor point 681 and a central anchor point 682. The suspension structure comprises anchoring suspenders 661 - 662 and connecting suspenders 651 - 652 aligned on the rotation axis 691. The first proof mass 61 comprises first measurement areas 611 near the rotation axis and a side bar 6119 which extends along one side of the first and second measurement areas 611 and 621 to the asymmetric second part which lies above the axis 692. A corresponding side bar 6219 joins the two measurement areas of the second proof mass to each other on the opposite side.

In other words, neither proof mass surrounds the other in this case. Nevertheless, the second proof mass is still suspended by torsionally flexible elements between the first proof mass and the anchor points. The second proof mass will therefore rotate less than the first proof mass, just as in the previous examples.

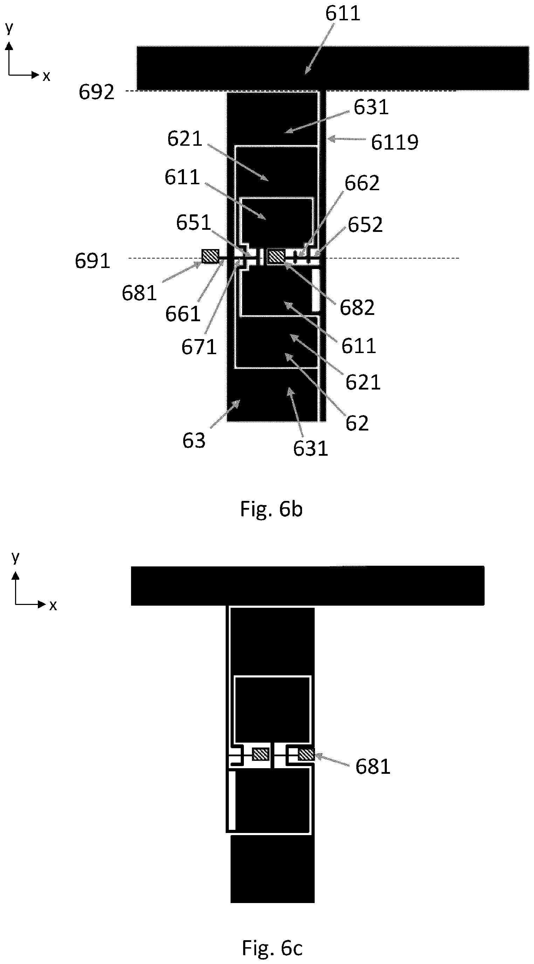

A third mass can also be added on one side of the accelerometer. In figure 6b the anchoring suspender 661 extends from side anchor point 681 to the third proof mass 63 and the other anchoring suspender 662 extends to the second proof mass 62. Connecting suspenders 651 - 652 extend between the first proof mass 61 and the second proof mass 62 as before, and an additional connecting suspender 671 joins the second proof mass 62 to the third proof mass 63. The center of mass of the third proof mass 63 lies here substantially on the rotation axis 691. The rotation of the first proof mass also sets the second and third proof masses in rotational movement, according to the principles described earlier.

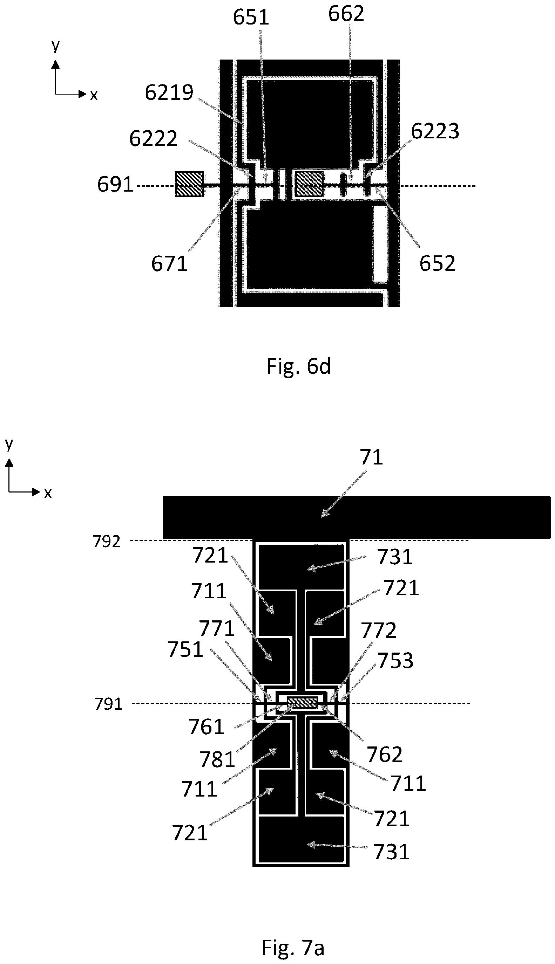

Figure 6c illustrates an alternative anchor point geometry where the side anchor point 681 has been placed inside the borders defined by the proof masses. This design consumes less surface area and can be useful in any application where many devices are placed side by side. Figure 6d illustrates the center of the device in figure 6b in more detail. The side bar 6219 in the second proof mass, which extends across the rotation axis 691, comprises a displacement section 6222 which shifts the crossing point between the rotation axis and the extension bar in the x-direction. A similar displacement section 6223 may be prepared on the opposite side of the central anchor point. These displacement sections 6222 - 6223 allow the masses to be placed close to each other while still allowing each torsionally flexible element on the rotation axis to be sufficiently long. Corresponding displacement sections could be implemented in any embodiment presented in this disclosure.

In general, when three masses are used in this embodiment the center of mass of the first proof mass lies on the first side of the rotation axis, the center of mass of the second proof mass lies substantially on the rotation axis, and the center of mass of the third proof mass lies substantially on the rotation axis. The suspension structure comprises one or more torsionally flexible anchoring suspenders which extend between the one or more anchor points and the third proof mass, one or more torsionally flexible connecting suspenders which extend between the first proof mass and the second proof mass, and one or more torsionally flexible connecting suspenders which extend between the second proof mass and the third proof mass.

The suspension structure may also comprise anchoring suspenders which extend from an anchor point to the second proof mass, such as suspender 662 in figure 6b. However, figure 7a illustrates a three-mass expansion of the device of figure 3a where the anchoring suspenders extend only to the third proof mass. Reference numbers 71, 72, 711, 721 and 791 correspond to reference numbers 21, 22, 211, 221 and 291, respectively, in figure 2a. The options that were presented with reference to the first and second proof masses 31 and 32 in figures 3a - 3b apply to first and second proof masses 71 and 72 also, except that the third proof mass has been suspended in between the second proof mass and the central anchor point 781. The third proof mass comprises third measurement areas 731. Once again, the torsional flexibility of the suspenders ensures that the second and third proof masses will rotate to an angle which is smaller than the rotation angle of the first proof mass, and the rotation angle of the third proof mass will also be less than that of the second proof mass.

In figure 7a the first proof mass surrounds, in addition to the second proof mass, also the third proof mass. The centers of mass of both the second and third proof mass lie substantially on the rotation axis. The second proof mass, which comprises measurement areas 721, is in figure 7a divided into two separate parts, one on the left and one on the right. However, the second proof mass could alternatively surround the third proof mass.

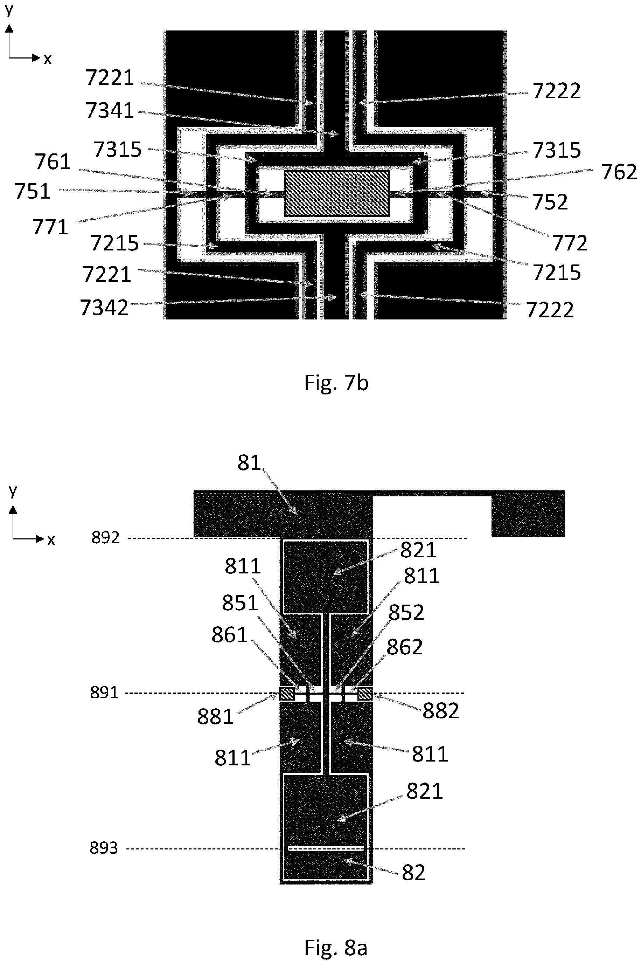

Figure 7b illustrates the suspension structure and the center of the device in figure 7a in more detail. The second proof mass here comprises frame parts 7215 which extend past opposite sides of the central anchor point 781. The third proof mass also comprises a frame part 7315 which surrounds the central anchor point 781. The second and third proof masses also comprise elongated extension bars 7221 - 7222 which extend orthogonally to the rotation axis 791 in opposite directions from the corresponding frame part 7215. The extension bars 7221 - 7222 also extend between the measurement areas 711 of the first proof mass which are seen in figure 7a. The third proof mass also comprises elongated extension bars 7341 - 7342 which extend orthogonally to the rotation axis 791 in opposite directions from the frame part 7315 and between the measurement areas 711. The frame parts and extension bars shown in figures 7a - 7b are stiff in the vertical z-direction, so that the proof masses can rotate as rigid bodies in seesaw motion about the rotation axis 791.

In figure 7b the anchoring suspenders 761 - 762 extend in opposite directions from the central anchor point 781 to the frame part 315. Connecting suspenders 771 - 772 extend from the frame part 315 to frame parts 7215 and connecting suspenders 751 - 752 in turn extend from frame parts 7215 to the first proof mass.

Many alterations can be made to the design illustrated in figure 7a. The second and third proof masses are reflection-symmetric with respect to the central anchor point 781 in figure 7a, but their geometry could alternatively be different. The right side of the second proof mass could for example be omitted and the left side enlarged, yielding a geometry similar to that of the second and third proof masses in figure 6b.

### Second embodiment

The center of mass of the first proof mass may lie on the first side of the rotation axis and the center of mass of the second proof mass may lie on the second side of the rotation axis. The suspension structure may comprise one or more torsionally flexible connecting suspenders which extend between the first proof mass and the second proof mass.

This second embodiment is similar to the first in that, due to the asymmetry of the first proof mass, a force which sets the accelerometer in accelerating motion will exercise a first torque on the first proof mass. The second embodiment differs from the first in that this force will also exercise a direct second torque on the second proof mass since it is asymmetric. This second torque will be in the opposite direction to the first torque because the first side of the rotation axis is opposite to the second.

The benefit of this arrangement is that the second proof mass does not necessarily have to be suspended between the first proof mass and the one or more anchor point. Instead, anchoring suspenders can in this embodiment be connected to the first proof mass and the second proof mass can be connected to the first proof mass with connecting suspenders. Due to the asymmetry of the second proof mass, the first and second proof mass will not rotate together at the same rate.

It is, however, also possible to suspend the second proof mass between the first proof mass and the one or more anchor points - in this case the second embodiment differs from the first only in that the rotation of the second proof mass is slower due to its asymmetry.

Figure 8a illustrates one example where reference numbers 81, 82, 811, 821 and 891 correspond to reference numbers 21, 22, 211, 221 and 291, respectively, in figure 2a. This device in in some respects similar to the one in figure 3a, but in figure 8a the first proof mass 81 is suspended from a first side anchor point 881 and a second side anchor point 882 by torsionally flexible anchoring suspenders 861 and 862, respectively. The second proof mass 82, on the other hand, is attached to the first proof mass with torsionally flexible connecting suspenders 851. The first proof mass surrounds the second proof mass.

As in figure 3a, the first proof mass 81 is asymmetric with respect to the rotation axis 891. In figure 8a the second proof mass 82 is asymmetric with respect to the rotation axis 891. Nevertheless, it may have a first part which is symmetric with respect to the rotation axis 891 - this is the part which lies above the axis 893 in figure 8a. The first part of the second proof mass 82 may be reflection-symmetric with respect to the point where the second proof mass crosses the rotation axis 891. The second proof mass 82 also has the additional second part which extends below the axis 893 in figure 8a. The second part makes the second proof mass 82 as a whole asymmetric with respect to the rotation axis 891. The comments given with reference to figure 3a also apply to figure 8a as far as the first proof mass 81 is concerned, except that its first part is not fully symmetric because it also extends around the asymmetric second part of second proof mass 82 below the axis 893.

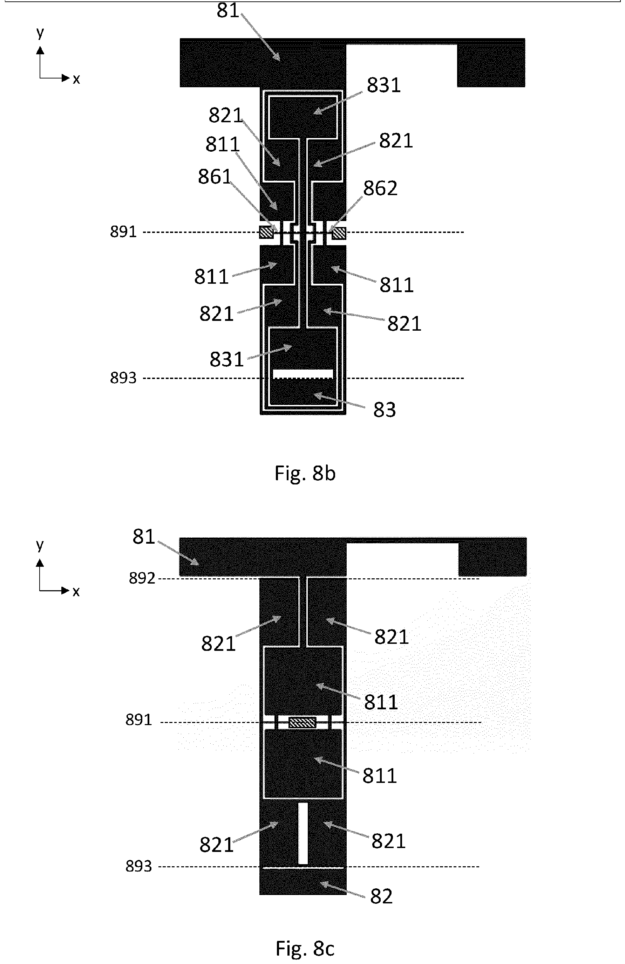

Figure 8b illustrates an example where a third proof mass 83 has been added. It comprises third measurement areas 831. In this case the center of mass of the third proof mass also lies on the second side of the rotation axis. Torsionally flexible connecting suspenders extend also from the second proof mass to the third proof mass. The second proof mass surrounds the third proof mass 83, and the first proof mass surrounds both the second and the third proof masses.

In figure 8b the center of mass of the second proof mass does not lie far from the rotation axis 891 because its asymmetric part only comprises a thin frame which extends around the asymmetric part of the third proof mass below axis 893. This will in some applications be an advantageous design because there needs to be a difference between the rotation rates of the second and third proof masses, and the asymmetry of the third proof mass will in this case slow down the rotation of the second proof mass to a suitable degree. However, the part of the second proof mass which extends around the third proof mass could alternatively be expanded to a larger area to increase the asymmetry of the second proof mass. The center of mass of the second proof mass could alternatively lie on the first side of the rotation axis or on the rotation axis. The torque transmitted from the asymmetric third proof mass to the second will still slow down the turning of the second proof mass. As in all other embodiments and examples, the geometry of the masses and the torsional properties of the anchoring suspenders and connecting suspenders determine the spring constants K which guide the rotation of each proof mass.

Figure 8c illustrates another example where the one or more anchor points comprise a single central anchor point. As in the previous examples, the first proof mass 81 is attached to the anchor point with anchoring suspenders, and the second proof mass 82 is attached to the first proof mass with connecting suspenders. The second proof mass here surrounds the first proof mass.

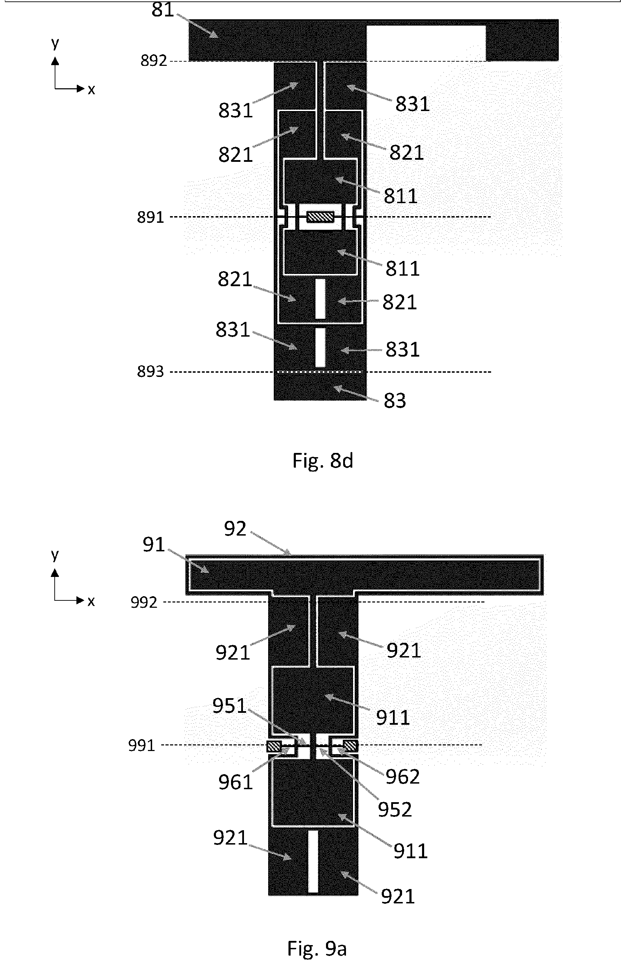

Figure 8d illustrates another three-mass example where the accelerometer also comprises a third proof mass 83 with measurement areas 831. Here the third proof mass 83 surrounds both the second proof mass and the first proof mass. The second proof mass is connected to the first proof mass with torsionally flexible connecting suspenders, and the third proof mass is connected to the second proof mass with torsionally flexible connecting suspenders. As in figure 8b, the asymmetry of the second proof mass may be in either direction, or it may even be symmetric as in figure 8d. The torque resulting from the greater asymmetry of the third proof mass in figure 8d will in any case be transmitted to the second proof mass where it will counteract the torque transmitted from the first proof mass. The suspension arrangement ensures that the rotation angle of the second proof mass will lie somewhere between that of the first proof mass and the third proof mass.

The various parts of the suspension structure and the proof masses can in the examples of figures 8a - 8d be designed according to the same principles that were discussed in the first embodiment, so they are not discussed in detail here.

In general, when a third mass is added to the accelerometer in this second embodiment, the center of mass of the third proof mass lies on the second side of the rotation axis, the center of mass of the second proof mass lies on the first or the second side of the rotation axis or on the rotation axis, and the suspension structure comprises one or more torsionally flexible anchoring suspenders which extend between the one or more anchor points and the first proof mass, and one or more torsionally flexible connecting suspenders which extend between the first proof mass and the second proof mass, and one or more torsionally flexible connecting suspenders which extend between the second proof mass and the third proof mass.

### Third embodiment

The center of mass of the first proof mass may lie on the first side of the rotation axis and the center of mass of the second proof mass may lie on the first side of the rotation axis. The suspension structure may comprise one or more torsionally flexible anchoring suspenders which extend between the one or more anchor points and the second proof mass, and one or more torsionally flexible connecting suspenders which extend between the first proof mass and the second proof mass, wherein the torsional flexibility of the connecting suspenders is greater than the torsional flexibility of the anchoring suspenders.

A force which sets the accelerometer in accelerating motion will exercise a first torque on the first proof mass and a second torque on the second proof mass. Both torques are in this case in the same direction. But since the connecting suspenders have greater torsional flexibility than the anchoring suspenders, the first proof mass, which is not anchored, will rotate more than the second proof mass, which is anchored.

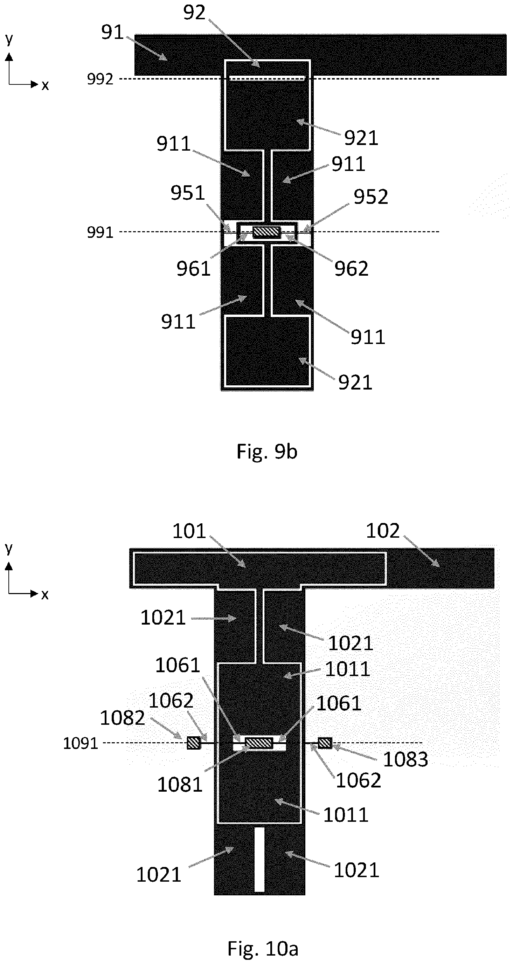

Figure 9a, where reference numbers 91, 92, 911, 921 and 991 correspond to reference numbers 21, 22, 211, 221 and 291, respectively, in figure 2a, illustrates an example where the second proof mass 92 is suspended by anchoring suspenders 961 and 962 from two side anchor points. Connecting suspenders 951 - 952 extend from the second proof mass to the first proof mass, and the second proof mass surrounds the first proof mass. Figure 9b, on the other hand, illustrates an example where the second proof mass 92 is suspended by anchoring suspenders 961 and 962 from a central anchor point. Connecting suspenders 951 - 952 again extend between the first and second proof masses, but this time the first proof mass surrounds the second proof mass.

The various parts of the suspension structure and the proof masses can in the examples of figures 9a - 9b be designed according to the same principles that were discussed in the first embodiment, so they are not discussed in detail here. As in the preceding embodiments, each of the asymmetric first and second proof masses 91 and 92 may comprise a first part below the line 992, and this first part may be reflection-symmetric with respect to the point where the first proof mass 91 crosses the rotation axis 992 (in figure 9a) or with respect to the central anchor point (in figure 9b). Each of the first and second proof masses 91 and 92 may also comprise a second part which lies above the line 992 and makes these masses asymmetric with respect to the rotation axis 991.

### Fourth embodiment

The center of mass of the first proof mass may lie on the first side of the rotation axis and the center of mass of the second proof mass may lie on the first side of the rotation axis. The suspension structure may comprise one or more torsionally flexible first anchoring suspenders which extend between the one or more anchor points and the first proof mass, and one or more torsionally flexible second anchoring suspenders which extend between the one or more anchor points and the second proof mass.

In this embodiment the suspension structure comprises two different suspension sets, one for the first proof mass and another for the second proof mass. These two sets are not interconnected, so no torque is transmitted from one proof mass to another. The proof masses and anchoring suspenders are simply dimensioned so that first proof mass rotates more than the second proof mass.

Figure 10a, where reference numbers 101, 102, 1011, 1021 and 1091 correspond to reference numbers 21, 22, 211, 221 and 291, respectively, in figure 2a, illustrates an example where the second proof mass 102 surrounds the first proof mass 101. The first proof mass 101 is suspended from the central anchor point 1081 by first anchoring suspenders 1061. The second proof mass 102 is suspended from the side anchor points 1082 and 1083 by second anchoring suspenders 1062. Other anchoring arrangements are also possible.

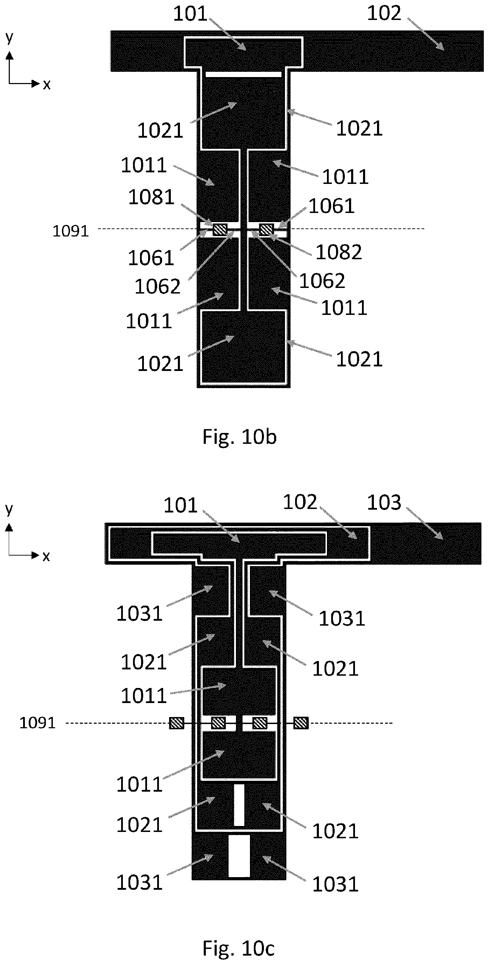

Figure 10b illustrates an example where the first proof mass 101 surrounds the second proof mass 102. In this example the two proof masses are both suspended from the same anchor points 1081 and 1082. The first proof mass 101 is suspended from first anchoring suspenders 1061 which extend outward from these anchor points and the second proof mass 102 is suspended from second anchoring suspenders 1062 which extend inward from the same anchor points 1081 and 1082. This suspension arrangement is one alternative which could be employed also in figure 10a.

A third mass may be added to the system, so that the center of mass of the first proof mass lies on the first side of the rotation axis, and the center of mass of the second proof mass lies on the first side of the rotation axis, and the center of mass of the third proof mass lies on the first side of the rotation axis. The suspension structure may then comprise one or more torsionally flexible first anchoring suspenders which extend between the one or more anchor points and the first proof mass, and one or more torsionally flexible second anchoring suspenders which extend between the one or more anchor points and the second proof mass, and one or more torsionally flexible third anchoring suspenders which extend between the one or more anchor points and the third proof mass.

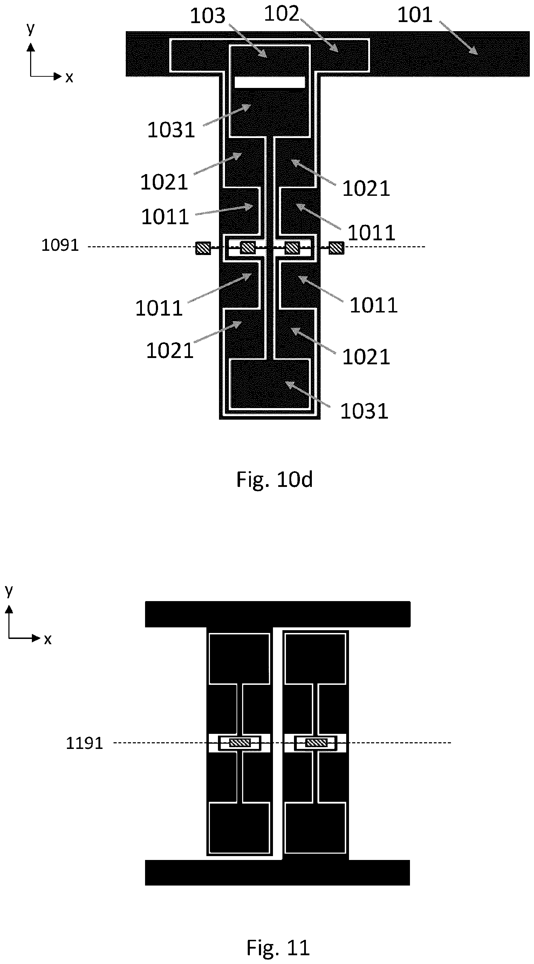

Figure 10c illustrated a three-mass example where a third mass 103 with measurement areas 1031 has been added. The suspenders have not been marked with reference numbers to avoid cluttering the figure, but it can be seen that each mass is suspended from the one or more anchor points with its own anchoring suspenders and that no connecting suspenders extend between two masses. The third proof mass 103 here surrounds the second proof mass 102, which surrounds the first proof mass 101. Figure 10d illustrates an example where the suspension principle is the same, but the first proof mass 101 surrounds the second proof mass 102, which surrounds the third proof mass 103.

### Additional options

In any embodiment of this disclosure where the accelerometer comprises only a first proof mass and a second proof mass, the accelerometer may comprise a first area and a second area, wherein a first part of the first proof mass is in the first area, a second part of the first proof mass is in the second area, and the entire second proof mass is in the first area. The first part of the first proof mass may be substantially symmetric with respect to the rotation axis within the first area, and the second proof mass may be substantially symmetric with respect to the rotation axis. The second part of the first proof mass then makes it asymmetric. Optionally, the ratio between the surface area of the first part of the first proof mass to the surface area of the second proof mass may be in the range 1:5 - 5:1, or in the range 1:3 - 3:1, or in the range 1:2 - 2:1. As an independent further option, the ratio between the surface area of the first part of the first proof mass to the surface area of the second part of the first proof mass may be in the range 1:2 - 10:1, or in the range 1:1 - 8:1, or in the range 1:1 - 5:1. As another independent further option, the ratio between the total surface area of the first proof mass to the surface area of the second proof mass may be in the range 1:5 - 5:1, or in the range 1:3 - 3:1, or in the range 1:2 - 2:1.

In any embodiment of this disclosure where the accelerometer comprises a first proof mass, a second proof mass and one or more additional masses, the accelerometer may comprise a first area and a second area, wherein a first part of the first proof mass is in the first area, a second part of the first proof mass is in the second area, and the second proof mass and additional proof masses are in their entirety in the first area. Optionally, the ratios between the surface area of the first part of the first proof mass to the surface areas of the second proof mass and to the surface area of each of the additional masses may all be in the range 1:5 - 5:1, or in the range 1:3 - 3:1, or in the range 1:2 - 2:1. As an independent further option, the first part of the first proof mass may be substantially symmetric with respect to the rotation axis within the first area, and the second proof mass and all additional proof masses may be substantially symmetric with respect to the rotation axis. As another independent further option, the ratio between the surface area of the first part of the first proof mass to the surface area of the second part of the first proof mass may be in the range 1:2 - 10:1, or in the range 1:1 - 8:1, or in the range 1:1 - 5:1. As another independent further option, the ratio between the total surface area of the first proof mass to the surface area of the second proof mass and to the surface area of each of the additional masses may be in the range 1:5 - 5:1, or in the range 1:3 - 3:1, or in the range 1:2 - 2:1.

In any embodiment of this disclosure, the torsionally flexible connecting suspenders and anchoring suspenders which are included in a suspension structure do not necessarily need to have substantially the same length in the direction of the rotation axis and the same width in the direction which is perpendicular to the rotation axis (although they may have the same length and width). The desired torsion properties can be obtained with many different spring geometries. The optimal geometry of these suspenders will depend on the geometry of the proof masses, the desired rotational response of each proof mass and on the available space.

In any embodiment of this disclosure, any proof mass may comprise narrow extension structures which extend across the rotation axis or to the suspension structure on the rotation axis. These extension structures may comprise displacement sections, which may be frames, frame parts or similar sections, which shift the crossing points between the extension structures and the rotation axis so that the suspenders mentioned above, which extend between such crossing points, obtain their desired dimensions.

In any embodiment of this disclosure, an accelerometer structure illustrated in the corresponding figure can be duplicated so that the two identical sets are built next to each other. A double differential measurement can then be performed. The sets may be oriented in opposite directions (the second set is turned 180 degrees in relation to the first) so that, for example, the center of mass of the first proof mass in the first set and the center of mass of the first proof mass in the second set lie on opposite sides of the rotation axis. This has been illustrated in figure 11, using the structure from figure 3a as an example of one set.

## Claims

1. An accelerometer for measuring acceleration in the direction of a z-axis which is perpendicular to an xy-plane, wherein the accelerometer comprises a first proof mass (21, 31, 41, 61, 71, 81, 91, 101) and one or more anchor points (281, 381, 481, 482, 681, 682, 781, 881, 882, 1081, 1082, 1083), and the first proof mass is suspended from the one or more anchor points by a torsionally flexible suspension structure (25) which allows the first proof mass to rotate about a rotation axis (291, 391, 491, 591, 691, 791, 891, 991, 1091) which lies in the xy-plane,
and the accelerometer also comprises a second proof mass (22, 32, 42, 62, 82, 92, 102) which is adjacent to the first proof mass and suspended from said one or more anchor points by the suspension structure, and the suspension structure allows the second proof mass to rotate about the rotation axis,
and the accelerometer comprises one or more first counter-electrodes (261 - 262) which are adjacent to the first and second proof masses in the z-direction on a first side of the rotation axis so that the one or more first counter-electrodes define a first measurement region (295) in the xy-plane on the first side of the rotation axis,
and the first measurement region comprises a first subregion (2951) in the xy-plane which lies closest to the rotation axis and a second subregion (2952) in the xy-plane which lies further away from the rotation axis,
**characterized in that** the first proof mass comprises one or more first measurement areas (211, 311, 411, 611, 711, 811, 911, 1011) in the first subregion (2951) of the first measurement region (295), and the second proof mass comprises one or more second measurement areas (212, 312, 412, 612, 712, 812, 912, 1012) in the second subregion (2952) of the first measurement region (295), and
the first and second proof masses and the suspension structure are dimensioned so that a ratio L / K is greater for the first proof mass than for the second proof mass but has the same sign for both proof masses, where L is the sum of the torques which act on said proof mass when the accelerometer undergoes acceleration in the direction of the z-axis, and K is the spring constant for the rotational motion of said proof mass about the rotation axis.

2. An accelerometer according to claim 1, **characterized in that** the accelerometer also comprises one or more second counter-electrodes (271 - 272) which are adjacent to the first and second proof mass in the z-direction on a second side of the rotation axis so that the one or more second counter-electrodes define a second measurement region (296) in the xy-plane on the second side of the rotation axis,
and the second measurement region comprises a first subregion (2961) in the xy-plane which lies closest to the rotation axis and a second subregion (2962) in the xy-plane which lies further away from the rotation axis,
and the first proof mass also comprises one or more first measurement areas (211) in the first subregion (2961) of the second measurement region, and the second proof mass also comprises one or more second measurement areas (221) in the second subregion (2962) of the second measurement region,
and the first measurement areas (211, 311, 411, 611, 711, 811, 911, 1011) in the first subregion (2951) of the first measurement region are substantially reflection-symmetric with the first measurement areas (211, 311, 411, 611, 711, 811, 911, 1011) in the first subregion (2961) of the second measurement region with respect to the rotation axis,
and the second measurement areas (212, 312, 412, 612, 712, 812, 912, 1012) in the second subregion (2952) of the first measurement region are substantially reflection-symmetric with the second measurement areas (212, 312, 412, 612, 712, 812, 912, 1012) in the second subregion (2962) of the second measurement region with respect to the rotation axis.

3. An accelerometer according to any of claims 1-2, **characterized in that** the first proof mass (21, 31, 71, 81, 91) surrounds the second proof mass (22, 32, 82, 92).

4. An accelerometer according to any of claims 1-2, **characterized in that** the second proof mass (42, 82, 92, 102) surrounds the first proof mass (41, 81, 91, 101).

5. An accelerometer according to any of claims 1-4, **characterized in that** the center of mass of the first proof mass (21, 31, 61, 71) lies on the first side of the rotation axis and the center of mass of the second proof mass (22, 32) lies substantially on the rotation axis, and the suspension structure comprises
- one or more torsionally flexible anchoring suspenders (361, 362, 661, 662, 761, 762) which extend between the one or more anchor points and the second proof mass (32), and
- one or more torsionally flexible connecting suspenders (351, 352, 351, 352, 651, 652, 751, 752) which extend between the first proof mass (31, 61, 71) and the second proof mass (32).

6. An accelerometer according to any of claims 1-4, **characterized in that** the center of mass of the first proof mass (81) lies on the first side of the rotation axis and the center of mass of the second proof mass lies (82) on the second side of the rotation axis, and the suspension structure comprises one or more torsionally flexible connecting suspenders (851, 852) which extend between the first proof mass and the second proof mass.

7. An accelerometer according to any of claims 1-4, **characterized in that** the center of mass of the first proof mass (91) lies on the first side of the rotation axis and the center of mass of the second proof mass (92) lies on the first side of the rotation axis, and the suspension structure comprises
- one or more torsionally flexible anchoring suspenders (961, 962) which extend between the one or more anchor points and the second proof mass, and
- one or more torsionally flexible connecting suspenders (951, 952) which extend between the first proof mass and the second proof mass, wherein the torsional flexibility of the connecting suspenders is greater than the torsional flexibility of the anchoring suspenders.

8. An accelerometer according to any of claims 1-4, **characterized in that** the center of mass of the first proof mass (101) lies on the first side of the rotation axis and the center of mass of the second proof mass (102) lies on the first side of the rotation axis, and the suspension structure comprises
- one or more torsionally flexible first anchoring suspenders (1061) which extend between the one or more anchor points and the first proof mass, and
- one or more torsionally flexible second anchoring suspenders (1062) which extend between the one or more anchor points and the second proof mass.

9. An accelerometer according to any of claims 2-4, **characterized in that** the accelerometer also comprises a third proof mass (23, 63, 83, 103) which is adjacent to the first and second proof masses and suspended from the suspension structure, wherein the suspension structure allows the third proof mass to rotate about the rotation axis, and the first and the second measurement regions (295) also comprise a third subregion (2953) in the xy-plane, wherein the third subregions lie further away from the rotation axis than the corresponding second subregions (2953), and the third proof mass comprises one or more third measurement areas (231, 431, 631, 731, 831, 1031) in the third subregion of the first and second measurement region,
and the third measurement areas (231, 431, 631, 731, 831, 1031) in the third subregion of the first measurement region are substantially reflection-symmetric with the third measurement areas (231, 431, 631, 731, 831, 1031) in the third subregion of the second measurement region with respect to the rotation axis,
wherein the first, second and third proof masses and the suspension structure are dimensioned so that the ratio L / K is greater for the first proof mass than for the second proof mass, and greater for the second proof mass than for the third proof mass, and has the same sign for all three proof masses.

10. An accelerometer according to claim 9, **characterized in that** the center of mass of the first proof mass (41, 71) lies on the first side of the rotation axis, the center of mass of the second proof mass (42, 72) lies substantially on the rotation axis, the center of mass of the third proof mass lies substantially on the rotation axis, and the suspension structure comprises
- One or more torsionally flexible anchoring suspenders (461, 462, 761, 762) which extend between the one or more anchor points and the third proof mass, and
- one or more torsionally flexible connecting suspenders (451, 452, 751, 752) which extend between the first proof mass and the second proof mass, and
- one or more torsionally flexible connecting suspenders (471, 472, 771, 772) which extend between the second proof mass and the third proof mass.

11. An accelerometer according to claim 9, **characterized in that** the center of mass of the first proof mass (81) lies on the first side of the rotation axis, the center of mass of the second proof mass lies on the first or the second side of the rotation axis or on the rotation axis, the center of mass of the third proof mass (83) lies on the second side of the rotation axis, and the suspension structure comprises
- one or more torsionally flexible anchoring suspenders (861, 862) which extend between the one or more anchor points and the first proof mass, and
- one or more torsionally flexible connecting suspenders which extend between the first proof mass and the second proof mass, and
- one or more torsionally flexible connecting suspenders which extend between the second proof mass and the third proof mass.

12. An accelerometer according to claim 9, **characterized in that** the center of mass of the first proof mass (101) lies on the first side of the rotation axis, and the center of mass of the second proof mass (102) lies on the first side of the rotation axis, and the center of mass of the third proof mass (103) lies on the first side of the rotation axis, and the suspension structure comprises
- one or more torsionally flexible first anchoring suspenders which extend between the one or more anchor points and the first proof mass, and
- one or more torsionally flexible second anchoring suspenders which extend between the one or more anchor points and the second proof mass, and
- one or more torsionally flexible third anchoring suspenders which extend between the one or more anchor points and the third proof mass.

## Patentansprüche

1. Beschleunigungsmesser zum Messen einer Beschleunigung in der Richtung einer z-Achse, die rechtwinklig zu einer xy-Ebene ist, wobei der Beschleunigungsmesser eine erste Prüfmasse (21) und einen oder mehrere Ankerpunkte umfasst und die erste Prüfmasse über eine drehelastische Aufhängungsstruktur (25), die das Drehen der ersten Prüfmasse um eine in der xy-Ebene liegende Rotationsachse (291) gestattet, an den einen oder mehreren Ankerpunkten (281) aufgehängt ist,
und der Beschleunigungsmesser auch eine zweite Prüfmasse (22) umfasst, die an die erste Prüfmasse angrenzt und über die Aufhängungsstruktur an den einen oder mehreren Ankerpunkten aufgehängt ist, und die Aufhängungsstruktur das Drehen der zweiten Prüfmasse um die Rotationsachse gestattet,
und der Beschleunigungsmesser eine oder mehrere erste Gegenelektroden (261-262) umfasst, die an die erste und zweite Prüfmasse in der z-Richtung auf einer ersten Seite der Rotationsachse angrenzen, sodass die eine oder mehreren ersten Gegenelektroden eine erste Messregion (295) in der xy-Ebene auf der ersten Seite der Rotationsachse definieren,
und die erste Messregion eine der Rotationsachse am nächsten gelegene erste Unterregion (2951) in der xy-Ebene und eine von der Rotationsachse weiter entfernt liegende zweite Unterregion (2952) in der xy-Ebene umfasst,
**gekennzeichnet dadurch, dass** die erste Prüfmasse einen oder mehrere erste Messbereiche (211) in der ersten Unterregion der ersten Messregion umfasst und die zweite Prüfmasse einen oder mehrere zweite Messbereiche (221) in der zweiten Unterregion der ersten Messregion umfasst, und
die erste und zweite Prüfmasse und die Aufhängungsstruktur so bemessen sind, dass ein L/K-Verhältnis für die erste Prüfmasse größer als für die zweite Prüfmasse ist, aber das gleiche Vorzeichen für beide Prüfmassen aufweist, wobei gilt: L ist die Summe der Drehmomente, die auf die Prüfmasse einwirken, wenn der Beschleunigungsmesser eine Beschleunigung in Richtung der z-Achse erfährt, und K ist die Federkonstante für die Drehbewegung der Prüfmasse um die Rotationsachse.

2. Beschleunigungsmesser nach Anspruch 1, **gekennzeichnet dadurch, dass** der Beschleunigungsmesser auch eine oder mehrere zweite Gegenelektroden (271-272) umfasst, die an die erste und zweite Prüfmasse in der z-Richtung auf einer zweiten Seite der Rotationsachse angrenzen, sodass die eine oder mehreren zweiten Gegenelektroden eine zweite Messregion (296) in der xy-Ebene auf der zweiten Seite der Rotationsachse definieren,
und die zweite Messregion eine der Rotationsachse am nächsten gelegene erste Unterregion (2961) in der xy-Ebene und eine von der Rotationsachse weiter entfernt liegende zweite Unterregion (2962) in der xy-Ebene umfasst,
und die erste Prüfmasse auch einen oder mehrere erste Messbereiche in der ersten Unterregion der zweiten Messregion umfasst und die zweite Prüfmasse auch einen oder mehrere zweite Messbereiche in der zweiten Unterregion der zweiten Messregion umfasst,
und die ersten Messbereiche in der ersten Unterregion der ersten Messregion, bezogen auf die Rotationsachse, im Wesentlichen spiegelsymmetrisch zu den ersten Messbereichen in der ersten Unterregion der zweiten Messregion sind,
und die zweiten Messbereiche in der zweiten Unterregion der ersten Messregion, bezogen auf die Rotationsachse, im Wesentlichen spiegelsymmetrisch zu den zweiten Messbereichen in der zweiten Unterregion der zweiten Messregion sind.

3. Beschleunigungsmesser nach einem der Ansprüche 1 bis 2, **gekennzeichnet dadurch, dass** die erste Prüfmasse die zweite Prüfmasse umgibt.

4. Beschleunigungsmesser nach einem der Ansprüche 1 bis 2, **gekennzeichnet dadurch, dass** die zweite Prüfmasse die erste Prüfmasse umgibt.

5. Beschleunigungsmesser nach einem der Ansprüche 1 bis 4, **gekennzeichnet dadurch, dass** der Masseschwerpunkt der ersten Prüfmasse auf der ersten Seite der Rotationsachse liegt und der Masseschwerpunkt der zweiten Prüfmasse im Wesentlichen auf der Rotationsachse liegt, und die Aufhängungsstruktur umfasst:
- ein oder mehrere drehelastische verankernde Aufhängungselemente, die sich zwischen den einen oder mehreren Ankerpunkten und der zweiten Prüfmasse erstrecken, und
- ein oder mehrere drehelastische verbindende Aufhängungselemente, die sich zwischen der ersten Prüfmasse und der zweiten Prüfmasse erstrecken.

6. Beschleunigungsmesser nach einem der Ansprüche 1 bis 4, **gekennzeichnet dadurch, dass** der Masseschwerpunkt der ersten Prüfmasse auf der ersten Seite der Rotationsachse liegt und der Masseschwerpunkt der zweiten Prüfmasse auf der zweiten Seite der Rotationsachse liegt, und die Aufhängungsstruktur ein oder mehrere drehelastische verbindende Aufhängungselemente, die sich zwischen der ersten Prüfmasse und der zweiten Prüfmasse erstrecken, umfasst.

7. Beschleunigungsmesser nach einem der Ansprüche 1 bis 4, **gekennzeichnet dadurch, dass** der Masseschwerpunkt der ersten Prüfmasse auf der ersten Seite der Rotationsachse liegt und der Masseschwerpunkt der zweiten Prüfmasse auf der ersten Seite der Rotationsachse liegt, und die Aufhängungsstruktur umfasst:
- ein oder mehrere drehelastische verankernde Aufhängungselemente, die sich zwischen den einen oder mehreren Ankerpunkten und der zweiten Prüfmasse erstrecken, und
- ein oder mehrere drehelastische verbindende Aufhängungselemente, die sich zwischen der ersten Prüfmasse und der zweiten Prüfmasse erstrecken, wobei die Drehelastizität der verbindenden Aufhängungselemente größer ist als die Drehelastizität der verankernden Aufhängungselemente.

8. Beschleunigungsmesser nach einem der Ansprüche 1 bis 4, **gekennzeichnet dadurch, dass** der Masseschwerpunkt der ersten Prüfmasse auf der ersten Seite der Rotationsachse liegt und der Masseschwerpunkt der zweiten Prüfmasse auf der ersten Seite der Rotationsachse liegt, und die Aufhängungsstruktur umfasst:
- ein oder mehrere drehelastische erste verankernde Aufhängungselemente, die sich zwischen den einen oder mehreren Ankerpunkten und der ersten Prüfmasse erstrecken, und
- ein oder mehrere drehelastische zweite verankernde Aufhängungselemente, die sich zwischen den einen oder mehreren Ankerpunkten und der zweiten Prüfmasse erstrecken.

9. Beschleunigungsmesser nach einem der Ansprüche 2 bis 4, **gekennzeichnet dadurch, dass** der Beschleunigungsmesser auch eine dritte Prüfmasse (23) umfasst, die an die erste und zweite Prüfmasse angrenzt und an der Aufhängungsstruktur aufgehängt ist, wobei die Aufhängungsstruktur das Drehen der dritten Prüfmasse um die Rotationsachse gestattet, und die erste und die zweite Messregion auch eine dritte Unterregion (2953) in der xy-Ebene umfassen, wobei die dritten Unterregionen weiter von der Rotationsachse entfernt liegen als die entsprechenden zweiten Unterregionen, und die dritte Prüfmasse einen oder mehrere dritte Messbereiche (231) in der dritten Unterregion der ersten und zweiten Messregion umfasst,
und die dritten Messbereiche in der dritten Unterregion der ersten Messregion, bezogen auf die Rotationsachse, im Wesentlichen spiegelsymmetrisch zu den dritten Messbereichen in der dritten Unterregion der zweiten Messregion sind,
wobei die erste, zweite und dritte Prüfmasse und die Aufhängungsstruktur so bemessen sind, dass das L/K-Verhältnis für die erste Prüfmasse größer als für die zweite Prüfmasse und für die zweite Prüfmasse größer als für die dritte Prüfmasse ist und das gleiche Vorzeichen für alle drei Prüfmassen aufweist.

10. Beschleunigungsmesser nach Anspruch 9, **gekennzeichnet dadurch, dass** der Masseschwerpunkt der ersten Prüfmasse auf der ersten Seite der Rotationsachse liegt, der Masseschwerpunkt der zweiten Prüfmasse im Wesentlichen auf der Rotationsachse liegt, der Masseschwerpunkt der dritten Prüfmasse im Wesentlichen auf der Rotationsachse liegt, und die Aufhängungsstruktur umfasst:
- ein oder mehrere drehelastische verankernde Aufhängungselemente, die sich zwischen den einen oder mehreren Ankerpunkten und der dritten Prüfmasse erstrecken, und
- ein oder mehrere drehelastische verbindende Aufhängungselemente, die sich zwischen der ersten Prüfmasse und der zweiten Prüfmasse erstrecken, und
- ein oder mehrere drehelastische verbindende Aufhängungselemente, die sich zwischen der zweiten Prüfmasse und der dritten Prüfmasse erstrecken.

11. Beschleunigungsmesser nach Anspruch 9, **gekennzeichnet dadurch, dass** der Masseschwerpunkt der ersten Prüfmasse auf der ersten Seite der Rotationsachse liegt, der Masseschwerpunkt der zweiten Prüfmasse auf der ersten oder zweiten Seite der Rotationsachse oder auf der Rotationsachse liegt, der Masseschwerpunkt der dritten Prüfmasse auf der zweiten Seite der Rotationsachse liegt, und die Aufhängungsstruktur umfasst:
- ein oder mehrere drehelastische verankernde Aufhängungselemente, die sich zwischen den einen oder mehreren Ankerpunkten und der ersten Prüfmasse erstrecken, und
- ein oder mehrere drehelastische verbindende Aufhängungselemente, die sich zwischen der ersten Prüfmasse und der zweiten Prüfmasse erstrecken, und
- ein oder mehrere drehelastische verbindende Aufhängungselemente, die sich zwischen der zweiten Prüfmasse und der dritten Prüfmasse erstrecken.

12. Beschleunigungsmesser nach Anspruch 9, **gekennzeichnet dadurch, dass** der Masseschwerpunkt der ersten Prüfmasse auf der ersten Seite der Rotationsachse liegt, und der Masseschwerpunkt der zweiten Prüfmasse auf der ersten Seite der Rotationsachse liegt, und der Masseschwerpunkt der dritten Prüfmasse auf der ersten Seite der Rotationsachse liegt, und die Aufhängungsstruktur umfasst:
- ein oder mehrere drehelastische erste verankernde Aufhängungselemente, die sich zwischen den einen oder mehreren Ankerpunkten und der ersten Prüfmasse erstrecken, und
- ein oder mehrere drehelastische zweite verankernde Aufhängungselemente, die sich zwischen den einen oder mehreren Ankerpunkten und der zweiten Prüfmasse erstrecken, und
- ein oder mehrere drehelastische dritte verankernde Aufhängungselemente, die sich zwischen den einen oder mehreren Ankerpunkten und der dritten Prüfmasse erstrecken.

## Revendications

1. Accéléromètre pour mesurer une accélération dans la direction d'un axe z qui est perpendiculaire à un plan xy, dans lequel l'accéléromètre comprend une première masse d'épreuve (21) et un ou plusieurs points d'ancrage, et la première masse d'épreuve est suspendue auxdits un ou plusieurs points d'ancrage (281) par une structure de suspension flexible en torsion (25) qui autorise la rotation de la première masse d'épreuve autour d'un axe de rotation (291) qui est situé dans le plan xy,
et l'accéléromètre comprend également une deuxième masse d'épreuve (22) qui est adjacente à la première masse d'épreuve et suspendue auxdits un ou plusieurs points d'ancrage par la structure de suspension, et la structure de suspension autorise la rotation de la deuxième masse d'épreuve autour de l'axe de rotation,
et l'accéléromètre comprend une ou plusieurs premières contre-électrodes (261-262) qui sont adjacentes aux première et deuxième masses d'épreuve dans la direction z sur un premier côté de l'axe de rotation de telle façon que lesdites une ou plusieurs premières contre-électrodes définissent une première région de mesure (295) dans le plan xy sur le premier côté de l'axe de rotation,
et la première région de mesure comprend une première sous-région (2951) dans le plan xy qui est la plus proche de l'axe de rotation et une deuxième sous-région (2952) dans le plan xy qui est plus éloignée de l'axe de rotation,
**caractérisé en ce que** la première masse d'épreuve comprend une ou plusieurs premières zones de mesure (211) dans la première sous-région de la première région de mesure et la deuxième masse d'épreuve comprend une ou plusieurs deuxièmes zones de mesure (221) dans la deuxième sous-région de la première région de mesure, et
les première et deuxième masses d'épreuve et la structure de suspension sont dimensionnées de telle façon qu'un rapport L/K pour la première masse d'épreuve est supérieur à celui pour la deuxième masse d'épreuve, mais présente le même signe pour les deux masses, où L est le total des couples qui agissent sur ladite masse d'épreuve lorsque l'accéléromètre subit une accélération dans la direction de l'axe z, et K est la constante de rappel pour le mouvement rotatif de ladite masse d'épreuve autour de l'axe de rotation.

2. Accéléromètre selon la revendication 1, **caractérisé en ce que** l'accéléromètre comprend également une ou plusieurs deuxièmes contre-électrodes (271-272) qui sont adjacentes aux première et deuxième masses d'épreuve dans la direction z sur un deuxième côté de l'axe de rotation de telle façon que lesdites une ou plusieurs deuxièmes contre-électrodes définissent une deuxième région de mesure (296) dans le plan xy sur le deuxième côté de l'axe de rotation,
et la deuxième région de mesure comprend une première sous-région (2961) dans le plan xy qui est la plus proche de l'axe de rotation et une deuxième sous-région (2962) dans le plan xy qui est plus éloignée de l'axe de rotation,
et la première masse d'épreuve comprend également une ou plusieurs premières zones de mesure dans la première sous-région de la deuxième région de mesure et la deuxième masse d'épreuve comprend également une ou plusieurs deuxièmes zones de mesure dans la deuxième sous-région de la deuxième région de mesure,
et les premières zones de mesure dans la première sous-région de la première région de mesure sont essentiellement symétriques en miroir aux premières zones de mesure dans la première sous-région de la deuxième région de mesure par rapport à l'axe de rotation,
et les deuxièmes zones de mesure dans la deuxième sous-région de la première région de mesure sont essentiellement symétriques en miroir aux deuxièmes zones de mesure dans la deuxième sous-région de la deuxième région de mesure par rapport à l'axe de rotation.

3. Accéléromètre selon l'une des revendications 1 à 2, **caractérisé en ce que** la première masse d'épreuve entoure la deuxième masse d'épreuve.

4. Accéléromètre selon l'une des revendications 1 à 2, **caractérisé en ce que** la deuxième masse d'épreuve entoure la première masse d'épreuve.

5. Accéléromètre selon l'une des revendications 1 à 4, **caractérisé en ce que** le centre de masse de la première masse d'épreuve est situé sur le premier côté de l'axe de rotation et le centre de masse de la deuxième masse d'épreuve est situé essentiellement sur l'axe de rotation, et la structure de suspension comprend
- un ou plusieurs éléments de suspension ancrants flexibles en torsion qui s'étendent entre lesdits un ou plusieurs points d'ancrage et la deuxième masse d'épreuve, et
- un ou plusieurs éléments de suspension reliants flexibles en torsion qui s'étendent entre la première masse d'épreuve et la deuxième masse d'épreuve.

6. Accéléromètre selon l'une des revendications 1 à 4, **caractérisé en ce que** le centre de masse de la première masse d'épreuve est situé sur le premier côté de l'axe de rotation et le centre de masse de la deuxième masse d'épreuve est situé sur le deuxième côté de l'axe de rotation, et la structure de suspension comprend un ou plusieurs éléments de suspension reliants flexibles en torsion qui s'étendent entre la première masse d'épreuve et la deuxième masse d'épreuve.

7. Accéléromètre selon l'une des revendications 1 à 4, **caractérisé en ce que** le centre de masse de la première masse d'épreuve est situé sur le premier côté de l'axe de rotation et le centre de masse de la deuxième masse d'épreuve est situé sur le premier côté de l'axe de rotation, et la structure de suspension comprend
- un ou plusieurs éléments de suspension ancrants flexibles en torsion qui s'étendent entre lesdits un ou plusieurs points d'ancrage et la deuxième masse d'épreuve, et
- un ou plusieurs éléments de suspension reliants flexibles en torsion qui s'étendent entre la première masse d'épreuve et la deuxième masse d'épreuve, la flexibilité en torsion desdits éléments de suspension reliants étant supérieure à la flexibilité en torsion desdits éléments de suspension ancrants.

8. Accéléromètre selon l'une des revendications 1 à 4, **caractérisé en ce que** le centre de masse de la première masse d'épreuve est situé sur le premier côté de l'axe de rotation et le centre de masse de la deuxième masse d'épreuve est situé sur le premier côté de l'axe de rotation, et la structure de suspension comprend
- un ou plusieurs premiers éléments de suspension ancrants flexibles en torsion qui s'étendent entre lesdits un ou plusieurs points d'ancrage et la première masse d'épreuve, et
- un ou plusieurs deuxièmes éléments de suspension ancrants flexibles en torsion qui s'étendent entre lesdits un ou plusieurs points d'ancrage et la deuxième masse d'épreuve.

9. Accéléromètre selon l'une des revendications 2 à 4, **caractérisé en ce que** l'accéléromètre comprend également une troisième masse d'épreuve (23) qui est adjacente aux première et deuxième masses d'épreuve et suspendue à la structure de suspension, dans lequel la structure de suspension autorise la rotation de la troisième masse d'épreuve autour de l'axe de rotation, et les première et deuxième régions de mesure comprennent également une troisième sous-région (2953) dans le plan xy, lesdites troisièmes sous-régions étant plus éloignées de l'axe de rotation que les deuxièmes sous-régions correspondantes, et la troisième masse d'épreuve comprend une ou plusieurs troisièmes zones de mesure (231) dans la troisième sous-région des première et deuxième régions de mesure,
et les troisièmes zones de mesure dans la troisième sous-région de la première région de mesure sont essentiellement symétriques en miroir aux troisièmes zones de mesure dans la troisième sous-région de la deuxième région de mesure par rapport à l'axe de rotation,
lesdites première, deuxième et troisième masses d'épreuve et ladite structure de suspension étant dimensionnées de telle façon que le rapport L/K pour la première masse d'épreuve est supérieur à celui pour la deuxième masse d'épreuve et celui pour la deuxième masse d'épreuve est supérieur à celui pour la troisième masse d'épreuve, et présente le même signe pour toutes les trois masses d'épreuve.

10. Accéléromètre selon la revendication 9, **caractérisé en ce que** le centre de masse de la première masse d'épreuve est situé sur le premier côté de l'axe de rotation, le centre de masse de la deuxième masse d'épreuve est situé essentiellement sur l'axe de rotation, le centre de masse de la troisième masse d'épreuve est situé essentiellement sur l'axe de rotation, et la structure de suspension comprend
- un ou plusieurs éléments de suspension ancrants flexibles en torsion qui s'étendent entre lesdits un ou plusieurs points d'ancrage et la troisième masse d'épreuve, et
- un ou plusieurs éléments de suspension reliants flexibles en torsion qui s'étendent entre la première masse d'épreuve et la deuxième masse d'épreuve, et
- un ou plusieurs éléments de suspension reliants flexibles en torsion qui s'étendent entre la deuxième masse d'épreuve et la troisième masse d'épreuve.

11. Accéléromètre selon la revendication 9, **caractérisé en ce que** le centre de masse de la première masse d'épreuve est situé sur le premier côté de l'axe de rotation, le centre de masse de la deuxième masse d'épreuve est situé sur le premier ou le deuxième côté de l'axe de rotation ou sur l'axe de rotation, le centre de masse de la troisième masse d'épreuve est situé sur le deuxième côté de l'axe de rotation, et la structure de suspension comprend
- un ou plusieurs éléments de suspension ancrants flexibles en torsion qui s'étendent entre lesdits un ou plusieurs points d'ancrage et la troisième masse d'épreuve, et
- un ou plusieurs éléments de suspension reliants flexibles en torsion qui s'étendent entre la première masse d'épreuve et la deuxième masse d'épreuve, et
- un ou plusieurs éléments de suspension reliants flexibles en torsion qui s'étendent entre la deuxième masse d'épreuve et la troisième masse d'épreuve.

12. Accéléromètre selon la revendication 9, **caractérisé en ce que** le centre de masse de la première masse d'épreuve est situé sur le premier côté de l'axe de rotation, et le centre de masse de la deuxième masse d'épreuve est situé sur le premier côté de l'axe de rotation, et le centre de masse de la troisième masse d'épreuve est situé sur le premier côté de l'axe de rotation, et la structure de suspension comprend
- un ou plusieurs premiers éléments de suspension ancrants flexibles en torsion qui s'étendent entre lesdits un ou plusieurs points d'ancrage et la première masse d'épreuve, et
- un ou plusieurs deuxièmes éléments de suspension ancrants flexibles en torsion qui s'étendent entre lesdits un ou plusieurs points d'ancrage et la deuxième masse d'épreuve, et
- un ou plusieurs troisièmes éléments de suspension ancrants flexibles en torsion qui s'étendent entre lesdits un ou plusieurs points d'ancrage et la troisième masse d'épreuve.
